(19) Europäisches Patentamt / European Patent Office / Office européen des brevets

(11) **EP 4 613 506 A1**

(12) **EUROPEAN PATENT APPLICATION**

(43) Date of publication:
**10.09.2025 Bulletin 2025/37**

(21) Application number: **25159557.5**

(22) Date of filing: **24.02.2025**

(51) International Patent Classification (IPC):
**B60C 1/00** $^{(2006.01)}$ **B60C 5/14** $^{(2006.01)}$
**B60C 15/06** $^{(2006.01)}$ **B60C 13/00** $^{(2006.01)}$

(52) Cooperative Patent Classification (CPC):
**B60C 5/14; B60C 1/0008; B60C 1/0025;**
B60C 2001/005; B60C 2005/145; B60C 2013/007;
B60C 2015/0614

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.03.2024 JP 2024033079**
**04.02.2025 JP 2025016724**

(71) Applicant: **Sumitomo Rubber Industries, Ltd.**
**Kobe-shi,**
**Hyogo-ken 651-0072 (JP)**

(72) Inventor: **MATSUZAWA, Yuki**
**Kobe-shi 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) Provided is a tire comprising a pair of sidewall parts, wherein each of the sidewall parts comprises at least one tire member composed of a rubber composition comprising a recovered carbon black, and wherein $W_{SW}$, G, $W_L$, $A_{IPU}$, and $A_{CB}$ satisfy the following inequalities (1), (2), and (3) simultaneously,

$$(1)\ G/W_L < 0.0130,$$

$$(2)\ (G/W_L) \times W_{SW} \geq 0.020,$$

$$(3)\ A_{IPU} \times A_{CB} \geq 2500,$$

where $W_{SW}$ represents a thickness of a sidewall rubber, G represents a weight of the tire, $W_L$ represents a maximum load capacity of the tire, $A_{IPU}$ represents a total content of rubbers comprising an isoprene unit in a rubber component in the rubber composition, and $A_{CB}$ represents a total content of carbon black of the rubber component.

FIG. 1

**EP 4 613 506 A1**

**Description**

TECHNICAL FIELD

The present invention relates to a tire.

BACKGROUND OF THE INVENTION

Fuel efficiency, ride comfort, etc. have been demanded for a sidewall. JP 2013-1889 A describes a tire comprising a sidewall composed of a rubber composition that comprises a butadiene rubber containing a predetermined amount of a 1,2-syndiotactic polybutadiene crystal, a terminal-modified butadiene rubber, an isoprene-based rubber, and resin, wherein the tire improves in fuel efficiency, steering stability, ride comfort, etc.

SUMMARY OF THE INVENTION

It is an object of the present invention to provide a tire with an improved overall performance of fuel efficiency and ride comfort.
The tire relating to the present invention is as follows.
A tire comprising a pair of sidewall parts,

wherein each of the sidewall parts comprises at least one tire member composed of a rubber composition comprising a recovered carbon black, and
wherein $W_{SW}$, G, $W_L$, $A_{IPU}$, and $A_{CB}$ satisfy the following inequalities (1), (2), and (3) simultaneously,

$$(1)\ G/W_L < 0.0130,$$

$$(2)\ (G/W_L) \times W_{SW} \geq 0.020,$$

$$(3)\ A_{IPU} \times A_{CB} \geq 2500,$$

where $W_{SW}$ represents a thickness, in mm, at a tire maximum width position, of a sidewall rubber constituting the sidewall parts, G represents a weight, in kg, of the tire, $W_L$ represents a maximum load capacity, in kg, of the tire, $A_{IPU}$ represents a total content, in % by mass, of rubbers comprising an isoprene unit in a rubber component in the rubber composition, and $A_{CB}$ represents a total content, in parts by mass, of carbon black comprising a recovered carbon black based on 100 parts by mass of the rubber component.

According to the present invention, a tire can be provided which improves in an overall performance of fuel efficiency and ride comfort by using a recovered carbon black.

BRIEF DESCRIPTION OF THE DRAWINGS

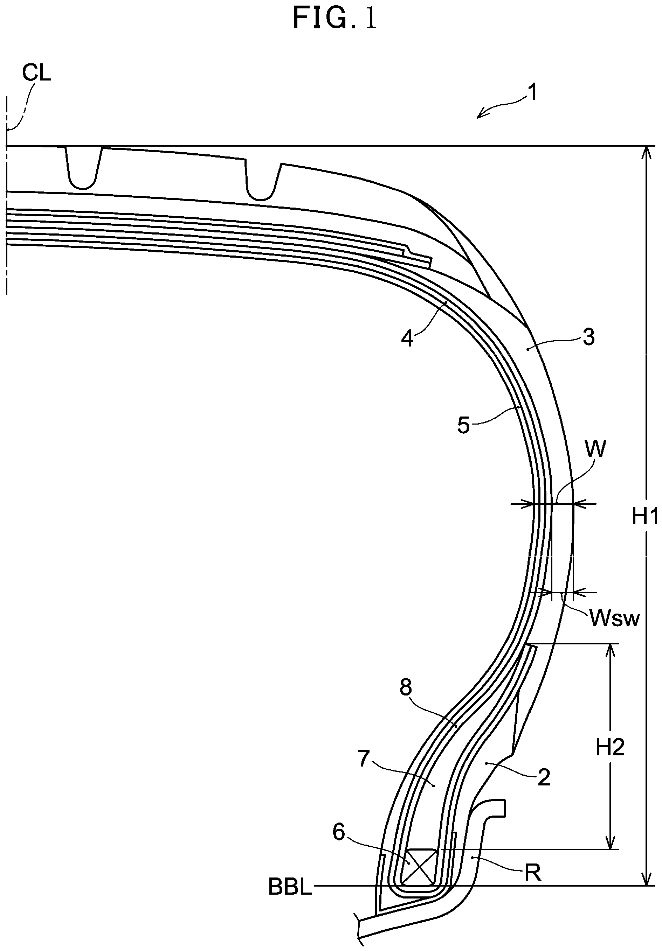

FIG. 1 is a schematic view showing a part of a cross section of a tire relating to one embodiment of the present invention taken along a tire meridian line (the upper right-side part of the cross section).

DETAILED DESCRIPTION

The tire relating to one embodiment of the present invention is a tire comprising a pair of sidewall parts, wherein each of the sidewall parts comprises at least one tire member composed of a rubber composition comprising a recovered carbon black, and wherein $W_{SW}$, G, $W_L$, $A_{IPU}$, and $A_{CB}$ satisfy the following inequalities (1), (2), and (3) simultaneously,

$$(1)\ G/W_L < 0.0130,$$

$$(2)\ (G/W_L) \times W_{SW} \geq 0.020,$$

$$(3) \quad A_{IPU} \times A_{CB} \geq 2500,$$

where $W_{SW}$ represents a thickness, in mm, at a tire maximum width position, of a sidewall rubber constituting the sidewall parts, G represents a weight, in kg, of the tire, $W_L$ represents a maximum load capacity, in kg, of the tire, $A_{IPU}$ represents a total content, in % by mass, of rubbers comprising an isoprene unit in a rubber component in the rubber composition, and $A_{CB}$ represents a total content, in parts by mass, of carbon black comprising a recovered carbon black based on 100 parts by mass of the rubber component.

Although it is not intended to be bound by a theory, a reason why the overall performance of fuel efficiency and ride comfort can be improved in the present invention is considered as follows. That is, (A) since a tire satisfying the requirement of the inequality (1) and the relationship in the inequality (2) has a high load resistance for its weight, such a tire is advantageous for an improvement in fuel efficiency and ride comfort. And, the rubbers of the sidewalls have a thickness appropriate for the maximum load capacity and the weight of the tire and thus the sidewalls absorb a shock from a road surface, which is considered to lead to an improvement in ride comfort. In addition, a recovered carbon black is compounded in an inner member of this tire, and the total content $A_{IPU}$ of the rubbers comprising an isoprene unit in the rubber component and the content $A_{CB}$ of the carbon black satisfy the inequality (3), which are thereby considered to contribute to an improvement in ride comfort. Moreover, (B) in a case where each member constituting a sidewall part of a tire (for example, a sidewall, a clinch apex, an insulation, an inner liner, etc.) is thinned, fuel efficiency is improved, but such a case causes a problem of deterioration of ride comfort. Since a recovered carbon black is made from a material such as a waste tire and the like and comprises various particles such as ash and the like, use of a rubber composition comprising a recovered carbon black for a member constituting a sidewall part of a tire enables conversion of vibrational energy of vibration accompanied by a wide range of input frequencies from a road surface into thermal energy, which is considered to contribute to an improvement in ride comfort. It is considered that, with cooperation of (A) and (B), a tire can be obtained which improves in overall performance of fuel efficiency and ride comfort.

The right side of the inequality (1) is preferably 0.0126, more preferably 0.0124, further preferably 0.0122.

The right side of the inequality (2) is preferably 0.022, more preferably 0.025, further preferably 0.030, further preferably 0.034, further preferably 0.040.

The maximum load capacity $W_L$ of the tire is preferably greater than 535.

It is considered that a tire whose $W_L$ is large has a large tire volume, which, when viewed as a whole tire, reduces local distortion, thereby maintaining balance and improving ride comfort. It is considered that fulfilment of a predetermined $W_L$ leads to an improvement in ride comfort.

The right side of the inequality (3) is preferably 3000, more preferably 3500, further preferably 4000.

A tire satisfying the inequality comprises a large amount of an isoprene-based rubber and has a good balance between fuel consumption and tensile characteristics. Moreover, it comprises a large amount of carbon black, whereby reinforcing property of the rubber is improved, and it is considered that the tire becomes resistant to shocks from a road surface, which is considered to lead to a further improvement in fuel efficiency and ride comfort of the tire.

The at least one tire member composed of the rubber composition comprising a recovered carbon black is preferably at least one tire member selected from the group consisting of a clinch apex, a sidewall, an insulation, and an inner liner.

When the rubber composition relating to the present invention is applied to a member constituting a sidewall part of a tire, it is considered that the effects of the present invention are exhibited.

It is preferable that the at least one tire member composed of the rubber composition comprising a recovered carbon black is a clinch apex, the rubber composition constituting the clinch apex comprises a rubber component that comprises greater than 20% by mass and 100% by mass or less of an isoprene-based rubber, and in a case where a content of the isoprene-based rubber in the rubber component is less than 100% by mass, the rubber component comprises at least one of a butadiene rubber and a styrene-butadiene rubber.

When the rubber composition comprises an isoprene-based rubber at the above-described ratio, the tensile strength of the rubber is improved, and the tire becomes resistant to shocks from a road surface, which is therefore considered to improve ride comfort.

It is preferable that the at least one tire member composed of the rubber composition comprising a recovered carbon black is a sidewall, and the rubber composition constituting the sidewall comprises greater than 20% by mass and less than 80% by mass of an isoprene-based rubber and at least one of a butadiene rubber and a styrene-butadiene rubber.

When the rubber composition comprises an isoprene-based rubber at the above-described ratio, the tensile strength of the rubber is improved, and the tire becomes resistant to shocks from a road surface, which is therefore considered to improve ride comfort.

It is preferable that the at least one tire member composed of the rubber composition comprising a recovered carbon black is an insulation, the rubber composition constituting the insulation comprises a rubber component that comprises greater than 20% by mass and 100% by mass or less of an isoprene-based rubber, and in a case where a content of the isoprene-based rubber in the rubber component is less than 100% by mass, the rubber component comprises at least one of a butadiene rubber and a styrene-butadiene rubber.

When the rubber composition comprises an isoprene-based rubber at the above-described ratio, the tensile strength of the rubber is improved, and the tire becomes resistant to shocks from a road surface, which is therefore considered to improve ride comfort.

It is preferable that the at least one tire member composed of the rubber composition comprising a recovered carbon black is an inner liner, the rubber composition constituting the inner liner comprises a rubber component that comprises greater than 70% by mass and 100% by mass or less of a butyl-based rubber, and in a case where a content of the butyl-based rubber in the rubber component is less than 100% by mass, the rubber component comprises an isoprene-based rubber.

When the rubber composition comprises a butyl-based rubber at the above-described ratio, the air permeation resistance of the rubber composition is improved, and air pressure inside the tire is appropriately maintained, which is considered to improve ride comfort.

It is preferable that the rubber composition constituting the sidewall comprises silica, and when a content, in parts by mass, of the recovered carbon black in the rubber composition constituting the sidewall is referred to as $A_{rCB}$ and a content, in parts by mass, of silica in the rubber composition constituting the sidewall is referred to as $A_{SIL}$, $A_{rCB}$ and $A_{SIL}$ satisfy the following inequality (4),

$$(4)\ A_{SIL}/A_{rCB} < 1.$$

When silica is compounded, an effect of improving elongation at break (EB) is obtained, and also the rubber composition is easily reinforced. Moreover, when the inequality (4) is satisfied, the content of the silica becomes smaller than the content of the recovered carbon black. Then, in such a tire, an effect of dispersing force by the recovered carbon black is obtained while the effect of improving elongation at break by the silica is obtained, and the rubber composition is reinforced, which is considered to further improve crack resistance, in addition to the effects of the present invention.

When a total thickness, in mm, of the sidewall part at a position where a width of the tire becomes maximum in a direction of a tire rotation axis is referred to as W, W, G, and $W_L$ preferably satisfy the following inequality (5),

$$(5)\ (G/W_L) \times W \geq 0.070.$$

The entire sidewall part of a tire satisfying the inequality have thicknesses of rubbers appropriate for the maximum load weight and the weight of the tire, and the tire absorbs a shock from a road surface, which is considered to lead to an improvement in ride comfort.

It is preferable that the tire comprises a pair of bead cores and a bead filler adjacent to the bead cores, and when a tire cross-sectional height, in mm, is referred to as H1 and a height, in mm, of the bead filler based on an interface with the bead core is referred to as H2, H2/H1 is 0.08 or more and 0.30 or less.

The bead filler is a member useful in maintaining a structure of the tire, and when vibration received by the tread part of the tire travels from the tire to a vehicle, vibration is propagated also in the bead filler. It is considered that vibration is easily transmitted because the bead filler is a member that is harder than other members. Therefore, the larger the bead filler is (in other words, the higher the height of the bead filler is), the easier it becomes to transmit vibration in the bead filler, and the effect of improving ride comfort is lowered. Therefore, it is preferable to set the height to be equal to or less than a predetermined value relative to the tire cross-sectional height.

A total content, in % by mass, of the isoprene-based rubber and the butadiene rubber in the rubber component is preferably greater than 90.

When the rubber composition comprises an isoprene-based rubber at the above-described ratio, the tensile strength of the rubber is improved, and the tire becomes resistant to shocks from a road surface, which is therefore considered to improve ride comfort.

A total content, in % by mass, of the butyl-based rubber and the isoprene-based rubber in the rubber component is preferably greater than 90.

A butyl rubber is excellent in air permeation resistance, which is therefore considered to lead to an improvement in air permeation resistance, in addition to the effects of the present invention.

<Definition>

A "standardized state" is a state in which the tire is rim-assembled to a standardized rim, filled with air at a standardized internal pressure, and applied with no load.

A "dimension of each part of a tire" is a value specified in a standardized state for one appearing on the outer surface of the tire unless otherwise specified, while it is a value specified, for example, in a condition where the tire is cut on a plane including a tire rotation axis and the cut tire piece is held to a rim width of a standardized rim, for one present inside the tire or on a tire cutting surface.

A "tire weight", in kg, is referred to as G and refers to a weight of a single tire excluding a weight of a rim. On the other hand, in a case where a member consisting of a sponge and a sealant, a sensor member, or the like is provided in a tire lumen, the tire weight shall be a weight including a weight of such a member.

A "standardized rim" is a rim, in a standard system including a standard on which the tire is based, defined by the standard for each tire. For example, the "standardized rim" refers to a standard rim of an applicable size described in "Jatma Year Book" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the "standardized rim" shall refer to a rim that can be rim-assembled and maintain an internal pressure, that is, one that has the smallest rim diameter and secondly has the narrowest rim width, among rims that do not cause air leakage between the rim and the tire.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Besides, in the case of tires that are not defined by the standard, a maximum load capacity $W_L$ obtained by another calculation is defined as a standardized load.

A "maximum load capacity $W_L$" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state (however, patterns, letters, or the like on the side surface of the tire, if any, are excluded). When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load.

$$W_L = 0.000011 \times V + 175$$

$$V = \{(Dt/2)^2 - (Dt/2 - Ht)^2\} \times \pi \times Wt$$

A "tire cross-sectional height H1" refers to a distance, in mm, in a tire radial direction, from a bead baseline BBL to the outermost side position in the tire radial direction.

A "height H2 of a bead filler" refers to a height, in mm, of a bead filler in a tire radial direction based on an interface between a bead core 6 and the bead filler 7.

A "bead baseline" refers to a line in a tire axial direction passing through a position of a rim diameter determined by the standard on which the tire is based (see JATMA).

A "sidewall part" refers to an area of a sidewall in a tire radial direction, and examples of members included in the sidewall part (in a direction of a tire rotation axis) include, for example, a clinch apex (which is simply referred to also as a clinch), a carcass, an insulation, an inner liner, and the like, besides the sidewall.

A "thickness $W_{SW}$, at a tire maximum width position, of a sidewall rubber constituting the sidewall parts" is a thickness, in mm, of a sidewall rubber at a tire maximum width position measured in a state where a tire cut along a surface including a tire rotation axis is held by a standardized rim. For example, $W_{SW}$ in FIG. 1 corresponds to such a thickness.

A "total thickness W, of the sidewall part" refers to a thickness, in mm, from a tire outer-side surface of an outermost-side member of a tire to a tire lumen-side surface of an innermost-side member of the tire at a position where a width of the tire becomes maximum in a direction of a tire rotation axis, and the total thickness W is measured in a state where a tire cut along a surface including the tire rotation axis is held by a standardized rim. For example, W in FIG. 1 corresponds to such a thickness. Usually, an outermost-side member of a tire is a sidewall and an innermost-side member of the tire is an inner liner.

A "thickness of a clinch apex" refers to a thickness of such a rubber layer measured along a normal line of a main body part of a carcass passing through a point at which a sidewall and a clinch apex come into contact with each other on a tire outer surface. In a case where the clinch apex is formed of a plurality of rubber layers, a total value of thicknesses of them is a "thickness of a clinch apex".

A "thickness of an insulation" and a "thickness of an inner liner" are each a thickness in a tire radial direction per one layer of each member on a tire equator on a cross section of a tire taken along a plane including a tire rotation axis. In a case where such members are not present on the equatorial plane, the thicknesses of these members are each a thickness in the tire radial direction per one layer of such a member at a middle position in a tire width direction of such a member.

For a "thickness of a sidewall", a "thickness of a clinch apex", a "thickness of an insulation", and a "thickness of an inner liner", an average value of respective values measured on tire cross sections along the plane including a tire rotation axis at five sites where a tire is rotated in 72 degree increments is used. Besides, the measurement can be performed by preparing a cross-sectional piece of the tire cut along the plane including the tire rotation axis and holding it with a space between its beads adjusted to match a width of a standardized rim.

A "rubber comprising an isoprene unit" refers to a rubber comprising an isoprene unit as a repeating unit, and in the present specification, examples of such a rubber include, in addition to an isoprene-based rubber, a butyl-based rubber that is a copolymer of isoprene and isobutylene. The isoprene-based rubber and the butyl-based rubber will be described below in details.

A "recovered carbon black" refers to carbon black that is obtained by a pyrolysis process of a product comprising carbon black such as a used tire and the like, in which a ratio of a mass of ash (ash content), which is a component that does not combust, is 13% by mass or more when the product is subjected to oxidative combustion by heating in the air, using a thermal weight measurement method according to JIS K 6226-2:2003. That is, a mass (carbon amount) of a weight loss content due to oxidative combustion is 87% by mass or less. The recovered carbon black is also referred to as "recycled carbon" or "recycled carbon black" and may be expressed by rCB.

A "filler" refers to a reinforcing filler and comprises a usual carbon black as well as a recovered carbon black in the present invention. Furthermore, as a filler other than carbon black, silica or any of reinforcing fillers other than silica that are used in the tire industry are included. A specific example of the filler will be described later.

<Measuring method>

A "styrene content" is calculated by pyrolysis gas chromatography. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" also is similarly calculated by pyrolysis gas chromatography.

A "cis content (cis-1,4-bond butadiene unit amount)" is a value calculated in accordance with JIS K 6239-2:2017 by an infrared absorption spectrometry and is applied to a rubber component having a repeating unit derived from butadiene such as, for example, a BR and the like.

An "ash content of a recovered carbon black" is measured by a thermal weight measurement method of JIS K 6226-2:2003.

An "average primary particle size of a carbon black" and an "average primary particle size of a recovered carbon black" are values calculated by an arithmetic mean of particle sizes of 400 particles which are photographed with a transmission or scanning electron microscope. In a case that the particle is in a spherical shape, a diameter of the sphere is defined as a particle size, and in cases of shapes other than the spherical shape, an equivalent circle diameter (positive square root of "$4\times$(area of particle)/$\pi$") calculated from a microscope image is defined as a particle size.

"$N_2SA$ of carbon black" is a value calculated by JIS K 6217-7:2017.

"$N_2SA$ of silica" is a value measured by a BET method according to ASTM D3037-93.

<Tire>

The tire relating to one embodiment of the present invention will be described below with reference to the drawings as appropriate. However, the drawings are merely examples for explanation.

Fig. 1 is a schematic view showing a part of a cross section of a tire relating to one embodiment of the present invention taken along a tire meridian line (the upper right-side part of the cross section). In FIG. 1, a tire 1 comprises a pair of sidewalls 3 arranged on the both sides, and a clinch apex 2 arranged on an end of the sidewalls 3 on an inner side in a tire radial direction. An inner liner 5 constitutes an inner surface of the tire 1 and retains an internal pressure in the tire 1. An insulation 4 is adjacent to the outer side of the inner liner 5 in a direction of a tire rotation axis, and the inner liner 5 is jointed to another member via the insulation 4. Moreover, the tire in FIG. 1 comprises a pair of bead cores 6 arranged on the both sides, and a bead filler 7 adjacent to the bead cores 6.

**In** one embodiment of the present invention, at least one rubber of the tire selected from the group consisting of a clinch apex rubber, a sidewall rubber, an insulation rubber, and an inner liner rubber comprises a recovered carbon black.

**In** a preferred embodiment, the at least one rubber comprising a recovered carbon black is a clinch apex rubber 2. **In** another preferred embodiment, the at least one rubber comprising a recovered carbon black is a sidewall rubber 3. **In** yet another preferred embodiment, the at least one rubber comprising a recovered carbon black is an insulation rubber 4. **In** further another preferred embodiment, the at least one rubber comprising a recovered carbon black is an inner liner rubber 5.

In a preferred embodiment, the rubber comprising a recovered carbon black is at least two rubbers selected from the group consisting of the clinch apex rubber, the sidewall rubber, the insulation rubber, and the inner liner rubber, at least three rubbers selected from the above-described group, or all of the clinch apex rubber, the sidewall rubber, the insulation rubber, and the inner liner rubber.

In one embodiment of the present invention, the tire comprises a pair of sidewall parts, each of the sidewall parts comprising at least one tire member composed of a rubber composition comprising a recovered carbon black, and when a thickness, in mm, at a tire maximum width position, of a sidewall rubber constituting the sidewall parts is referred to as $W_{SW}$, a weight, in kg, of the tire is referred to as G, a maximum load capacity, in kg, of the tire is referred to as $W_L$, a total content, in % by mass, of rubbers comprising an isoprene unit in a rubber component in the rubber composition is referred to as $A_{IPU}$, and a total content, in parts by mass, of carbon black comprising a recovered carbon black based on 100 parts by mass of the rubber component is referred to as $A_{CB}$, $W_{SW}$, G, $W_L$, $A_{IPU}$, and $A_{CB}$ simultaneously satisfy predetermined relations expressed by the inequalities (1), (2), and (3).

(Regarding inequality (1))

The inequality (1) stipulates that a ratio ($G/W_L$) of the tire weight G, in kg, of the tire of the present invention to the maximum load capacity $W_L$, in kg, is less than 0.0130. The right side of the inequality (1) is preferably 0.0126, more preferably 0.0124, further preferably 0.0122. On the other hand, a lower limit value of $G/W_L$ can be, but not particularly limited to, for example, 0.0080 or more, preferably 0.0100 or more, more preferably 0.0110 or more.

The tire weight G, in kg, can be changed by a usual method. For example, the tire weight can be increased by increasing the specific gravity of the tire or by increasing a thickness of each member of the tire and can also be decreased in a reverse manner.

The maximum load capacity $W_L$, in kg, is, for example, 450 or more, preferably 500 or more, more preferably greater than 535. Moreover, the maximum load capacity $W_L$, in kg, is, for example, 1300 or less or can be preferably 1200 or less. Besides, the maximum load capacity $W_L$ is a value determined depending on the tire cross-sectional width Wt, in mm, the tire cross-sectional height Ht, in mm, and the tire outer diameter Dt, in mm. The maximum load capacity can be increased by increasing a virtual volume of a space occupied by the tire and can also be decreased in a reverse manner.

A value of $G/W_L$ can be decreased by decreasing a relative value of G to a value of $W_L$ and can be conversely increased by increasing the relative value of G to the value of $W_L$.

(Regarding inequality (2))

The inequality (2) stipulates that a product of the ratio ($G/W_L$) of the tire weight G, in kg, to the maximum load capacity $W_L$, in kg and the thickness $W_{SW}$, in mm, of the sidewall rubber 3 at the tire maximum width position is 0.020 or more. The right side of the inequality (2) is preferably 0.022, more preferably 0.025, further preferably 0.030, further preferably 0.034, further preferably 0.040. On the other hand, an upper limit of the value on the left side of the inequality (2) can be, but not particularly limited to, usually, preferably 0.070 or less, more preferably 0.060 or less, further preferably 0.055 or less. The value of the inequality (2) can be increased by increasing the weight of the tire or by increasing the thickness of the sidewall and can be decreased by increasing the volume of the tire.

A thickness $W_{SW}$, in mm, of the sidewall rubber 3 at the tire maximum width position is preferably larger than 1.5 mm, more preferably larger than 1.8 mm, further preferably larger than 2.1 mm, and $W_{SW}$ is preferably smaller than 9.0 mm, more preferably smaller than 7.0 mm, further preferably smaller than 5.0 mm.

(Regarding inequality (3))

The inequality (3) stipulates that a product of the total content $A_{IPU}$, in % by mass, of the rubbers comprising an isoprene unit in the rubber component in the rubber composition and the total content $A_{CB}$, in parts by mass, of carbon black (comprising a recovered carbon black) based on 100 parts by mass of the rubber component is 2500 or more. The right side of the inequality (3) is preferably 3000, more preferably 3500, further preferably 4000. On the other hand, an upper limit of the value on the left side of the inequality (3) can be, but not particularly limited to, usually, preferably 6500 or less, more preferably 6000 or less, further preferably 5500 or less.

(Regarding inequality (4))

The tire, in which the rubber composition constituting the sidewall comprises silica and $A_{rCB}$ and $A_{SIL}$ satisfy the following inequality (4), is preferable:

$$(4)\ A_{SIL}/A_{rCB} < 1$$

wherein $A_{rCB}$ represents a content, in parts by mass, of the recovered carbon black in the rubber composition constituting the sidewall and $A_{SIL}$ represents a content, in parts by mass, of silica in the rubber composition constituting the sidewall.

The inequality (4) stipulates the relation between a content of a recovered carbon black and a content of silica in the rubber composition of the sidewall in a case where a member composed of the rubber composition comprising the recovered carbon black is a sidewall. The ratio of the content of the silica to the content of the recovered carbon black is preferably less than 1. The right side of the inequality (4) is more preferably 0.80, further preferably 0.70.

(Regarding inequality (5))

The tire, in which W, G, and $W_L$ satisfy the following inequality (5), is preferable:

$$(5)\ (G/W_L){\times}W \geq 0.070$$

wherein W represents a total thickness, in mm, of the sidewall part at a position where a width of the tire becomes maximum in a direction of a tire rotation axis.

The inequality (5) stipulates that a product of the ratio ($G/W_L$) of the tire weight G, in kg, of the tire of the present invention to the maximum load capacity $W_L$, in kg and the total thickness, in mm, of the sidewall part is 0.070 or more. The right side of the inequality (5) is preferably 0.075, more preferably 0.080, further preferably 0.085. On the other hand, an upper limit of the value on the left side of the inequality (5) is, but not particularly limited to, usually, about 0.16 or may be about 0.15 or about 0.14. The value of the inequality (5) can be increased by increasing the weight of the tire or by increasing the thickness of each member in the sidewall part to increase the total thickness and can be decreased by increasing the volume of the tire.

(H2/H1)

The tire comprises a pair of bead cores and a bead filler adjacent to the bead cores, and when a tire cross-sectional height, in mm, is referred to as H1 and a height, in mm, of the bead filler based on an interface with the bead core is referred to as H2, H2/H1 is 0.08 or more and 0.30 or less.

In FIG. 1, the tire 1 comprises a pair of bead cores 6 and a bead filler 7 adjacent to the bead cores 6. A solid line BBL extending in an axial direction is a bead baseline. This bead baseline is a line stipulating a rim diameter of a rim (standardized rim) (see JATMA , etc.). The tire cross-sectional height, in mm, is indicated by H1, and the height, in mm, of the bead filler 7 based on an interface with the bead core 6 is indicated by H2. In FIG. 1, the bead filler 7 is covered with a rolling-back part of a carcass 8. However, the bead filler may not be covered with the rolling-back part of the carcass. In a case where the bead filler is not covered with the rolling-back part of the carcass, the height H2 of the bead filler shall be a height up to a tip of the bead filler 7 in a tire radial direction based on the interface between the bead filler 7 and the bead core 6.

A value of H2/H1 is preferably 0.09 or more, more preferably 0.10 or more, further preferably 0.11 or more. On the other hand, this value is preferably 0.25 or less, more preferably 0.23 or less, further preferably 0.22 or less.

<Rubber composition>

A rubber composition used for a tire member constituting a sidewall part, specifically, rubber compositions constituting a clinch apex rubber, a sidewall rubber, an insulation rubber, and an inner liner rubber will be described below.

[Rubber composition for clinch apex]

Each component of a rubber composition for clinch apex will be described. At least one tire member composed of the rubber composition comprising a recovered carbon black is preferably a clinch apex.

<Rubber component>

The rubber composition constituting the clinch apex comprises a rubber component comprising greater than 20% by mass and 100% by mass or less of an isoprene-based rubber, and in a case where a content of the isoprene-based rubber in the rubber component is less than 100% by mass, the rubber component preferably comprises at least one of a butadiene rubber and a styrene-butadiene rubber. The rubber component preferably comprises an isoprene-based rubber (IR-based rubber) and a butadiene rubber (BR), and in this case, the rubber component can comprise a rubber component other than an IR-based rubber and a BR. Moreover, a total content of an IR-based rubber and a BR in the rubber component is preferably greater than 90% by mass or the rubber component may consist of an IR-based rubber and a BR. Descriptions of each rubber capable of constituting the rubber component are as follows.

(Isoprene-based rubber)

Examples of the isoprene-based rubber include a natural rubber (NR), an isoprene rubber (IR), a refined NR, a modified NR, a modified IR, and the like. For example, those common in the rubber industry such as SIR20, RSS#3, TSR20, and the like can be used as the NR. The IR is not particularly limited, and for example, those common in the rubber industry such as IR2200 and the like can be used. Examples of the refined NR include a deproteinized natural rubber (DPNR), an ultra pure natural rubber (UPNR), and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. The isoprene-based rubbers may be used alone, or two or more thereof may be used in combination.

A content of an IR-based rubber in 100% by mass of the rubber component is, for example, greater than 10% by mass, preferably greater than 20% by mass, more preferably greater than 40% by mass, further preferably 50% by mass or more. On the other hand, the content is, for example, 100% by mass or less, preferably less than 90% by mass, more preferably less than 80% by mass. When the content is within the above-described ranges, the tensile strength of the rubber is improved and the tire becomes resistant to shocks from a road surface, so that ride comfort tends to be improved.

(BR)

The BR is not particularly limited, and examples of the BR include those common in the tire industry, such as, for example, a BR having a high cis content, a BR containing a 1,2-syndiotactic polybutadiene crystal (SPB-containing BR), a butadiene rubber synthesized using a rare-earth element-based catalyst (a rare-earth-based BR), a tin-modified butadiene rubber modified by a thin compound (tin-modified BR), a modified butadiene rubber other than these BRs (modified BR), and the like. As a commercially available product of the BR, products from UBE Corporation, JSR Corporation, Asahi Kasei Corporation, Ltd., Zeon Corporation, etc. can be used. The modified BR may be a BR having a functional group interacting with a filler such as silica and the like. Examples of the modified BR include, for example, a terminal-modified BR obtained by modifying at least one terminal of a BR with a compound (a modifying agent) having the above-described functional group (terminal-modified BR having the above-described functional group at its terminal), a main chain modified BR whose main chain has the above-described functional group, a main chain terminal-modified BR having the above-described functional groups on its main chain and at its terminal (for example, a main chain terminal-modified BR whose main chain has the above-described functional group and at least one terminal of which is modified with the above-described modifying agent), a terminal-modified BR which is modified (coupled) with a polyfunctional compound having two or more epoxy groups in a molecule and into which a hydroxyl group or an epoxy group is introduced, and the like. Examples of the above-described functional group include, for example, an amino group, an amido group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. Besides, these functional groups may have a substituent. Among them, an amino group (preferably an amino group whose hydrogen atom is substituted with an alkyl group having 1 to 6 carbon atoms), an alkoxy group (preferably an alkoxy group having 1 to 6 carbon atoms), and an alkoxysilyl group (preferably an alkoxysilyl group having 1 to 6 carbon atoms) are preferable.

A cis amount (cis content) of a BR is preferably greater than 90% by mass, more preferably greater than 93% by mass, further preferably greater than 95% by mass, further preferably 97% by mass or more. The cis amount of the BR can be measured by infrared absorption spectrometry.

As the BR, for example, products from UBE Corporation, JSR Corporation, Asahi Kasei Corporation, Ltd., Zeon Corporation, etc. can be used. The BR may be used alone, or two or more thereof may be used in combination.

Moreover, a content of a BR in 100% by mass of the rubber component is, for example, greater than 10% by mass, preferably greater than 20% by mass, more preferably greater than 30% by mass. On the other hand, the content is, for example, less than 90% by mass, preferably less than 80% by mass, more preferably less than 70% by mass, further preferably less than 60% by mass. When the content is within the above-described ranges, the strength of the rubber at a low temperature is improved and the tire becomes resistant to shocks from a road surface even at a low temperature, so that ride comfort tends to be improved.

Moreover, a total content of an IR-based rubber and a BR in 100% by mass of the rubber component is preferably greater than 80% by mass, more preferably greater than 90% by mass, further preferably greater than 95% by mass, or may be 100% by mass.

(SBR)

The styrene-butadiene rubber (SBR) is not particularly limited, examples of which include, for example, an unmodified emulsion-polymerized styrene-butadiene rubber (E-SBR), an unmodified solution-polymerized styrene-butadiene rubber (S-SBR), and modified SBRs obtained by modifying these SBRs, such as a modified emulsion-polymerized styrene-butadiene rubber (modified E-SBR) and a modified solution-polymerized styrene-butadiene rubber (modified S-SBR), and the like. Examples of the modified SBR include a modified SBR modified at its terminal and/or main chain, a modified SBR coupled with tin, a silicon compound, etc. (a modified SBR of condensate or having a branched structure, etc.), and the like. Moreover, types of the SBR include an oil-extended type whose flexibility is adjusted by addition of an extending oil and a non-oil-extended type to which no extending oil is added, any of which can be used. As such an SBR, for example, products from JSR Corporation, Asahi Chemicals Co., Ltd., Zeon Corporation, ZS Elastomer Co., Ltd., etc. can be used. The SBR may be used alone, or two or more thereof may be used in combination.

A styrene content of an SBR is preferably greater than 15% by mass, more preferably greater than 20% by mass, further preferably greater than 23% by mass, from the viewpoint of processability. Moreover, the styrene content is preferably less than 40% by mass, more preferably less than 30% by mass, further preferably less than 25% by mass. Besides, the styrene content of the SBR is measured by the above-described measuring method.

A vinyl content (1,2-bond butadiene unit amount) of an SBR is preferably greater than 10 mol%, more preferably greater than 15 mol%, more preferably greater than 20 mol%, from the viewpoint of processability. Moreover, the vinyl content is preferably less than 80 mol%, more preferably less than 50 mol%, further preferably less than 30 mol%, from the viewpoint of fuel efficiency. Besides, the vinyl content of the SBR is measured by the above-described measuring method.

A content of an SBR-based rubber in 100% by mass of the rubber component is, for example, greater than 10% by mass, preferably greater than 20% by mass, more preferably greater than 40% by mass, further preferably 50% by mass or more. On the other hand, the content is, for example, 100% by mass or less, preferably less than 90% by mass, more preferably less than 80% by mass. When the content is within the above-described ranges, processability and fuel efficiency tend to be improved.

(Other rubbers)

Other usable rubbers other than the above-described rubbers are not particularly limited, and rubbers used in the tire field and the like can be used as such other rubbers. Examples of the other usable rubbers include, for example, diene-based rubbers such as an acrylonitrile-butadiene rubber (NBR), a chloroprene rubber (CR), a styrene-isoprene-butadiene copolymer rubber (SIBR), and the like. These other rubbers may be used alone, or two or more thereof may be used in combination.

(Rubber component synthesized from recycle-derived/biomass-derived raw material)

A monomer that is a structural unit of a synthetic rubber such as an IR, an SBR, a BR, and the like may be one derived from underground resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1-3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited and may be performed, for example, by extracting naphtha after decomposing a rubber product such as a tire and the like under high temperature and pressure, or decomposing it by microwaves, or mechanically pulverizing it.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, combinations thereof, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere was absorbed by plants to be fixed, all of $^{14}C$ elements, which were contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1 \times 10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. **In** the measurements, a $^{14}C$ concentration in a circulating carbon in nature as of 1950 is adopted as the modern standard reference that becomes a reference for the $^{14}C$ concentration. As a specific reference material, an oxalic acid standard provided by **NIST** (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

<Filler>

The rubber composition preferably comprises a filler. The filler can comprise a recovered carbon black (rCB). Moreover, the filler can comprise carbon black other than an rCB, or silica. In a case where the filler comprises silica, the filler can further comprise a silane coupling agent. The filler can further comprise another filler other than carbon black and silica.

(Recovered carbon black)

In the present invention, a recovered carbon black refers to carbon black that is obtained by a pyrolysis process of a product comprising carbon black such as a used tire and the like, in which a ratio of a mass of ash (ash content), which is a component that does not combust, is 13% by mass or more when the product is subjected to oxidative combustion by heating in the air, using a thermal weight measurement method according to JIS K 6226-2:2003. The ash content of a recovered carbon black is preferably 14% by mass or more, more preferably 15% by mass or more, further preferably 16% by mass or more, further preferably 17% by mass or more.

A recovered carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 800°C under an environment in which oxygen is eliminated or by vacuum pyrolysis at a relatively low temperature ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black of the present invention also include carbon black treated so as to include a functional group on its surface.

An average primary particle size of a recovered carbon black is preferably 20 nm or more, more preferably 25 nm or more, further preferably 30 nm or more, further preferably 35 nm or more. When the average primary particle size of carbon black is within the above-described ranges, rubber molecules bound by carbon black are minimized, and it becomes easy for the rubber molecules to flexibly move. Accordingly, it is considered that, for an input, stress can be mitigated even by polymer molecule chains. On the other hand, the average primary particle size is preferably 90 nm or less, more preferably 75 nm or less, further preferably 60 nm or less. Besides, the average primary particle size of carbon black is measured by the above-described measuring method.

A nitrogen adsorption specific surface area ($N_2SA$) of a recovered carbon black is, but not particularly limited to, preferably greater than 30 $m^2/g$, more preferably greater than 40 $m^2/g$, further preferably greater than 50 $m^2/g$, further preferably greater than 60 $m^2/g$, further preferably greater than 70 $m^2/g$, from the viewpoint that a sufficient reinforcing property and a good abrasion resistance can be obtained. Moreover, the $N_2SA$ is preferably less than 300 $m^2/g$, more preferably less than 200 $m^2/g$, further preferably less than 150 $m^2/g$, further preferably less than 120 $m^2/g$, further preferably less than 110 $m^2/g$, further preferably less than 100 $m^2/g$, further preferably less than 90 $m^2/g$, from the viewpoint that the recovered carbon black is excellent in dispersibility and is less likely to generate heat. Besides, the $N_2SA$ of the recovered carbon black in the present specification is a value measured according to JIS K 6217-2:2017.

(Carbon black other than rCB)

Examples of carbon black other than the recovered carbon black include, but not particularly limited to, N134, N110, N220, N234, N219, N339, N330, N326, N351, N550, N660, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used. They may be used alone, or two or more thereof may be used in combination.

An average primary particle size of carbon black is preferably 20 nm or more, more preferably 25 nm or more, further preferably 30 nm or more, further preferably 35 nm or more. When the average primary particle size of carbon black is within the above-described ranges, rubber molecules bound by carbon black are minimized, and it becomes easy for the rubber molecules to flexibly move. Accordingly, it is considered that, for an input, stress can be mitigated even by polymer molecule chains. On the other hand, the average primary particle size is preferably 90 nm or less, more preferably 75 nm or less, further preferably 60 nm or less. Besides, the average primary particle size of carbon black is measured by the above-described measuring method.

A nitrogen adsorption specific surface area ($N_2SA$) of carbon black is, but not particularly limited to, preferably greater than 30 $m^2/g$, more preferably greater than 40 $m^2/g$, further preferably greater than 50 $m^2/g$, further preferably greater than 60 $m^2/g$, further preferably greater than 70 $m^2/g$, from the viewpoint that a sufficient reinforcing property and a good abrasion resistance can be obtained. Moreover, the $N_2SA$ is preferably less than 300 $m^2/g$, more preferably less than 200 $m^2/g$, further preferably less than 150 $m^2/g$, further preferably less than 120 $m^2/g$, further preferably less than 110 $m^2/g$, further preferably less than 100 $m^2/g$, further preferably less than 90 $m^2/g$, from the viewpoint that carbon black is excellent in dispersibility and is less likely to generate heat. Besides, the $N_2SA$ of carbon black in the present specification is a value measured according to JIS K 6217-2:2017.

(Content of carbon black)

A total content of carbon black comprising a recovered carbon black when compounded based on 100 parts by mass of the rubber component is, for example, greater than 30 parts by mass, preferably greater than 40 parts by mass, more preferably 50 parts by mass or more, further preferably 60 parts by mass or more. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack growth resistance tend to be obtained.

A content rate of the recovered carbon black in the total content of carbon black is, for example, greater than 10% by mass, preferably greater than 20% by mass, more preferably greater than 30% by mass, further preferably 40% by mass or more, from the viewpoint of reinforcing property. On the other hand, the content is preferably less than 80% by mass, more preferably less than 70% by mass, further preferably less than 60% by mass.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component including a semiconductor, a tire, a desiccant, a filtering material including diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

As a crystallized silica is insoluble in water, silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.).

As an amorphous silica extracted from rice husks, those commercially available from Wilmar, etc. can be used.

A nitrogen adsorption specific surface area ($N_2SA$) of silica is preferably greater than 50 $m^2/g$, more preferably greater than 100 $m^2/g$, further preferably greater than 150 $m^2/g$, further preferably greater than 170 $m^2/g$. Moreover, an upper limit of the $N_2SA$ of silica is, but not particularly limited to, preferably less than 350 $m^2/g$, more preferably less than 250 $m^2/g$, further preferably less than 200 $m^2/g$. When the content is within the above-described ranges, cut resistance tends to be improved. Besides, the $N_2SA$ of silica is a value measured by a BET method according to ASTM D3037-93.

(Content of silica)

A content of silica when compounded based on 100 parts by mass of the rubber component is, but not particularly limited to, preferably greater than 1 part by mass, preferably greater than 5 parts by mass, more preferably greater than 10 parts by mass, further preferably greater than 20 parts by mass, from the viewpoint of securing fuel efficiency and ride comfort. Moreover, the content is preferably less than 150 parts by mass, more preferably less than 100 parts by mass, further preferably less than 50 parts by mass, further preferably less than 30 parts by mass, from the viewpoints of dispersibility of silica and processability.

(Silane coupling agent)

In a case where silica is used as a filler, a rubber composition preferably further comprises a silane coupling agent. Examples of the silane coupling agent include, but not particularly limited to, for example, sulfide-based ones such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N, N-dimethylthiocarbamoyl tetrasulfide, 2-triethoxysilylethyl-N, N-dimethylthiocarbamoyl tetrasulfide, 3-triethoxysilylpropyl methacrylate monosulfide, and the like; mercapto-based ones such as 3-mercaptopropyltrimethoxysilane, 2-mercaptoethyltriethoxysilane, NXT and NXT-Z100 manufactured by Momentive Performance Materials, and the like; vinyl-based ones such as vinyltriethoxysilane, vinyltrimethoxysilane, and the like; amino-based ones such as 3-aminopropyltriethoxysilane, 3-aminopropyltrimethoxysilane, and the like; glycidoxy-based ones such as γ-glycidoxypropyltriethoxysilane, γ-glycidoxypropyltrimethoxysilane, and the like; nitro-based ones such as 3-nitropropyltrimethoxysilane, 3-nitropropyltriethoxysilane, and the like; and chloro-based ones such as 3-chloropropyltrimethoxysilane, 3-chloropropyltriethoxysilane, and the like. As a commercially available product, products from Evonik Industries AG, Momentive Performance Materials, Shin-Etsu Chemical Co., Ltd., Tokyo Chemical Industry Co, Ltd., AZmax.co, Dow Corning Toray Co., Ltd., etc. can be used. These silane coupling agents may be used alone, or two or more thereof may be used in combination.

(Content of silane coupling agent)

A content of a silane coupling agent when compounded based on 100 parts by mass of silica is preferably greater than 1 part by mass, more preferably greater than 3 parts by mass, further preferably greater than 5 parts by mass, further preferably greater than 7 parts by mass. On the other hand, the content is preferably less than 20 parts by mass, more preferably less than 18 parts by mass, further preferably less than 16 parts by mass, further preferably less than 14 parts by mass. When the content is within the above-described ranges, dispersibility of the silica tends to be improved.

(Other fillers)

Other fillers are not particularly limited, and materials known in the field of the tire industry can be used as other fillers. Examples of such other fillers include, for example, inorganic fillers such as calcium carbonate, talc, alumina, clay, aluminum hydroxide, aluminum oxide, mica, and the like. They may be used alone, or two or more thereof may be used in combination.

<Other compounding agents>

The rubber composition can appropriately comprise compounding agents conventionally and commonly used in the tire industry, for example, a plasticizing agent, processing aid, a vulcanized rubber particle, wax, stearic acid, zinc oxide, an antioxidant, a vulcanizing agent, a vulcanization accelerator, and the like, in addition to the rubber component and the filler.

<Plasticizing agent>

The plasticizing agent is a material giving a rubber component plasticity and includes both a plasticizing agent that is a liquid (in a liquid state) at normal temperature (25°C) and a plasticizing agent that is solid at normal temperature (25°C). Examples of the plasticizing agent include oil, a liquid polymer, a resin component, an ester-based plasticizing agent, and the like. These plasticizing agents may be ones derived from mineral resources such as petroleum, natural gas, and the like, or ones derived from biomass. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

<<Oil>>

Oil is not particularly limited, and any of those commonly used in the tire industry can be appropriately used as oil, and examples of oil include, for example, process oils, vegetable oils, animal oils, and the like. Examples of the process oils include paraffinic process oils (mineral oils), naphthenic process oils, aromatic process oils, and the like. Specific examples of the process oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, process oils each having a low content of a polycyclic aromatic compound (PCA) can also be used. Examples of the process oils each having a low content of a PCA include MES, TDAE, heavy naphthenic oil, and the like. Moreover, from the viewpoint of a life cycle assessment, one obtained by refining a waste oil after use for a rubber mixing machine or an engine or waste cooking oil used in a cooking facility may also be used. Among them, the aromatic process oils are preferable, and the TDAE oils are more preferable. As the oil, for example, those manufactured and sold by H&R Group, JXTG Nippon Oil & Energy Corporation, Idemitsu Kosan Co., Ltd., Sankyo Yuka Kogyo K. K., etc., and the like can be used. Oil may be used alone, or two or more thereof may be used in combination.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at normal temperature (25°C). The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at normal temperature (25°C).

Whether the rubber composition comprises the above-described acylglycerol can be confirmed by, but not particularly limited to, $^1$H-NMR measurement. For example, a heavy chloroform in which a rubber composition containing triacylglycerol is immersed at normal temperature (25°C) for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

A content of oil based on 100 parts by mass of the rubber component is preferably greater than 1 part by mass, more preferably greater than 3 parts by mass, further preferably greater than 5 parts by mass. Moreover, the content is preferably less than 20 parts by mass, more preferably less than 15 parts by mass, further preferably less than 10 parts by mass. Besides, the content of oil shall also include an amount of oil contained as an extending oil in a rubber component or oil contained in another component such as sulfur.

<<Liquid polymer>>

A liquid polymer is a polymer in a liquid state at normal temperature (25°C), examples of which include, for example, a liquid diene-based polymer, and the like. Examples of the liquid diene-based polymer include a liquid styrene-butadiene copolymer (liquid SBR), a liquid butadiene polymer (liquid BR), a liquid isoprene polymer (liquid IR), a liquid styrene-isoprene copolymer (liquid SIR), and the like. A number average molecular weight (Mn) of the liquid diene-based polymer, which is measured with a gel permeation chromatography (GPC) and calculated in terms of polystyrene, is preferably greater than 1000, more preferably greater than 3000. On the other hand, the Mn is preferably less than 100000, more preferably less than 15000. A Mn of the liquid polymer is a value measured with a gel permeation chromatography (GPC) and calculated in terms of polystyrene. As a liquid diene-based polymer, for example, products from Sartomer, Kuraray Co., Ltd., etc. can be used. The liquid polymer may be used alone, or two or more thereof may be used in combination.

<<Resin component>>

The rubber composition relating to the present embodiment may comprise a resin component in combination. The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, or two or more thereof may be used in combination, respectively.

• C9-based resin

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

• C5-based resin

A "C5-based resin" refers to a resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

• C5/C9-based resin

A "C5/C9-based resin" refers to a resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

• Dicyclopentadiene-based resin

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

• Aromatic vinyl-based resin

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

• Coumarone-based resin

A "coumarone-based resin" refers to a resin comprising coumarone as a monomer component and may be one obtained by hydrogenating or modifying it. As the coumarone-based resin, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

• Indene-based resin

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

• Terpene-based resin

A "terpene-based resin" refers to a resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

• Rosin-based resin

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., **IREC** Co., Ltd., etc. can be used.

• Phenol-based resin

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., **DIC** Corporation, **ASAHI YUKIZAI**

**CORPORATION,** etc. can be used.

<<Ester-based plasticizing agent>>

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

(Antioxidant)

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha,\alpha$'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, and polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably 3.0 parts by mass or less.

(Vulcanized rubber particle)

The vulcanized rubber particle is a particle made of a vulcanized rubber. Specifically, a rubber powder specified in JIS K6316:2017, and the like can be used. A recycled rubber powder produced from a pulverized product of a waste tire and the like is preferable from the viewpoints of consideration for environment and cost. They may be used alone, or two or more thereof may be used in combination.

The vulcanized rubber particle is not particularly limited and may be a non-modified vulcanized rubber particle or a modified vulcanized rubber particle.

As a commercially available product of a vulcanized rubber, for example, products manufactured by Lehigh Technologies, Muraoka Rubber Reclaiming Co., Ltd. etc. can be used.

(Processing aid)

Examples of processing aid include, for example, a fatty acid metal salt, a fatty acid amide, an amide ester, a silica surfactant, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Wax)

Wax is not particularly limited, and any of those commonly used in the tire industry can be appropriately used, examples of which include, for example, a petroleum-based wax, a mineral-based wax, a synthetic wax, and the like. Among them, the petroleum-based wax is preferable. Examples of the petroleum-based wax include, for example, a paraffin wax, a microcrystalline wax, a specially selected wax thereof, and the like. Among them, the paraffin wax is preferable. As wax, for example, those manufactured and sold by Ouchi Shinko Chemical Industry Co., Nippon Seiro Co., Ltd., PARAMELT, etc. can be used. Wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

(Stearic acid)

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 5 parts by mass, further preferably less than 3 parts by mass, from the viewpoint of vulcanization rate.

(Zinc oxide)

A content of zinc oxide when compounded based on 100 parts by mass of the rubber component is preferably greater than 0.5 parts by mass, more preferably greater than 0.7 parts by mass, further preferably greater than 1 part by mass, from the viewpoint of processability. On the other hand, the content is preferably less than 10 parts by mass, more preferably less than 7 parts by mass, further preferably 5 parts by mass or less, from the viewpoint of abrasion resistance.

(Vulcanizing agent)

A vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like, etc. Among them, the sulfur-based vulcanizing agent is preferable. As the sulfur-based vulcanizing agent, for example, sulfur donors such as sulfur, morpholine disulfide, and the like, etc. can be used. Among them, the use of sulfur is preferable. The vulcanizing agent can be used alone, or two or more thereof can be used in combination.

Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.

A content of a vulcanizing agent when compounded based on 100 parts by mass of the rubber component is preferably greater than 0.4 parts by mass, more preferably greater than 0.5 parts by mass, further preferably greater than 1.0 parts by mass, further preferably greater than 1.5 parts by mass. On the other hand, the content is preferably less than 6.0 parts by mass, more preferably 5.0 parts by mass or less, further preferably less than 4.0 parts by mass. When the content of the vulcanizing agent is within the above-described ranges, an appropriate reinforcing effect tends to be obtained, and the effects of the present invention tend to be exhibited better. Besides, in a case where the vulcanizing agent includes a component other than sulfur like an oil-processing sulfur and the like, the content of the vulcanizing agent means a content of a sulfur component itself.

(Vulcanization accelerator)

A vulcanization accelerator is not particularly limited, and known vulcanization accelerators can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. Among them, the sulfenamide-based vulcanization accelerator, the thiuram-based vulcanization accelerator, and the guanidine-based vulcanization accelerator are preferable, and the sulfenamide-based vulcanization accelerator is more preferable. As the vulcanization accelerator, for example, those manufactured and sold by Ouchi Shinko Chemical Industry Co., Ltd., Sanshin Chemical Industry Co., Ltd., etc., and the like can be used. These vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N'-dicyclohexyl-2-benzothiazolyl sulfenamide (DZ), and the like. Examples of the thiuram-based vulcanization accelerator include, for example, tetramethylthiuram monosulfide, tetramethylthiuram disulfide, tetrabenzylthiuram disulfide (TBzTD), and the like. Examples of the guanidine-based vulcanization accelerator include, for example, 1,3-diphenylguanidine (DPG), diorthotrilguanidine, orthotrilbiguanidine, and the like.

A content of a vulcanization accelerator based on 100 parts by mass of the rubber component is preferably greater than 0.3 parts by mass, more preferably greater than 0.4 parts by mass, further preferably greater than 0.5 parts by mass. On the other hand, the content is preferably less than 4.0 parts by mass, more preferably less than 3.0 parts by mass, further preferably less than 2.0 parts by mass. When the content of the vulcanization accelerator is within the above-described ranges, breaking strength and elongation tend to be secured, and the effects of the present invention tend to be exhibited better.

[Rubber composition for sidewall]

Each component of a rubber composition for sidewall will be described. At least one tire member composed of the rubber composition comprising a recovered carbon black is preferably a sidewall, and the rubber composition constituting a sidewall preferably comprises greater than 20% by mass and less than 80% by mass of an isoprene-based rubber and at least one of a butadiene rubber and a styrene-butadiene rubber.

(Rubber component)

A rubber component preferably comprises an IR-based rubber and at least one of a BR and an SBR. The rubber component more preferably comprises an IR-based rubber and a BR, and in this case, the rubber component can comprise a rubber component other than IR-based rubbers and a BR. Descriptions of the rubber component are as follows and are as described in the explanation for the rubber composition for clinch apex.

<<Content>>

Although descriptions of a content of the rubber component are as described for the rubber composition for clinch apex, a content of an IR-based rubber in 100% by mass of the rubber component is, for example, greater than 10% by mass, preferably greater than 20% by mass, more preferably greater than 40% by mass, further preferably 50% by mass or more. On the other hand, the content is, for example, 100% by mass or less, preferably less than 90% by mass, more preferably less than 80% by mass. When the content is within the above-described ranges, the tensile strength of the rubber is improved and the tire becomes resistant to shocks from a road surface, so that ride comfort tends to be improved.

Moreover, a content of a BR in 100% by mass of the rubber component is, for example, greater than 10% by mass, preferably greater than 20% by mass, more preferably greater than 30% by mass. On the other hand, the content is, for example, less than 90% by mass, preferably less than 80% by mass, more preferably less than 70% by mass, further preferably less than 60% by mass. When the content is within the above-described ranges, the strength of the rubber at a low temperature is improved and the tire becomes resistant to shocks from a road surface even at a low temperature, so that ride comfort tends to be improved.

Moreover, a total content of an IR-based rubber and a BR in 100% by mass of the rubber component is preferably greater than 80% by mass, more preferably greater than 90% by mass, further preferably greater than 95% by mass or may be 100% by mass.

(Filler)

The filler can comprise a recovered carbon black (rCB). Moreover, the filler can comprise carbon black other than an rCB or silica. In a case where the filler comprises silica, the filler can further comprise a silane coupling agent. The filler can further comprise another filler other than carbon black and silica. Descriptions of each component capable of constituting the filler are as described for the rubber composition for clinch apex.

<<Content of carbon black>>

A total content of carbon black comprising a recovered carbon black when compounded based on 100 parts by mass of the rubber component is, for example, greater than 30 parts by mass, preferably greater than 40 parts by mass, more preferably 50 parts by mass or more, further preferably 60 parts by mass or more. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack growth resistance tend to be obtained.

A content rate of the recovered carbon black in the total content of carbon black is, for example, greater than 10% by mass, preferably greater than 20% by mass, more preferably greater than 30% by mass, further preferably 40% by mass or more, from the viewpoint of reinforcing property. On the other hand, the content is preferably less than 80% by mass, more preferably less than 70% by mass, further preferably less than 60% by mass.

The explanation made for the rubber composition for clinch apex can be similarly applied to these other carbon black (including the recovered carbon black).

<<Content of silica>>

A content of silica when compounded based on 100 parts by mass of the rubber component is, but not particularly limited to, preferably greater than 1 part by mass, preferably 5 parts by mass or more, more preferably greater than 10 parts by mass, further preferably greater than 20 parts by mass, from the viewpoint of securing fuel efficiency and ride comfort. Moreover, the content is preferably less than 150 parts by mass, more preferably less than 100 parts by mass, further preferably less than 50 parts by mass, further preferably less than 30 parts by mass, from the viewpoints of dispersibility of silica and processability.

<<Relation between content of silica and content of rCB>>

In a case where the rubber composition constituting the sidewall comprises a recovered carbon black, $A_{rCB}$ and $A_{SIL}$ preferably satisfy the following inequality (4), wherein $A_{rCB}$ represents a content, in parts by mass, of the recovered carbon black and $A_{SIL}$ represents a content, in parts by mass, of silica,

$$(4)\ A_{SIL}/A_{rCB} < 1.$$

The right side of the inequality (4) is preferably 0.8, more preferably 0.6. Moreover, in a case where the rubber composition for sidewall does not comprise silica, a value on the left side of the inequality (4) becomes 0. However, even in such a case, it can be considered that the relationship of the inequality (4) is satisfied.

<<Content of silane coupling agent>>

The explanation made for the rubber composition for clinch apex can be similarly applied to a content of a silane coupling agent in a case where the rubber composition comprises a silane coupling agent.

(Other compounding agents)

The explanation made for the rubber composition for clinch apex can be similarly applied to matters other than the matters described above.

[Rubber composition for insulation]

Each component of a rubber composition for insulation will be described. At least one tire member composed of the rubber composition comprising a recovered carbon black is preferably an insulation, and it is preferable that the rubber composition constituting an insulation comprises a rubber component comprising greater than 20% by mass and 100% by mass or less of an isoprene-based rubber and that, in a case where a content of the isoprene-based rubber in the rubber component is less than 100% by mass, the rubber component comprises at least one of a butadiene rubber and a styrene-butadiene rubber.

(Rubber component)

A rubber component preferably comprises an IR-based rubber and at least one of a BR and an SBR. The rubber component more preferably comprises an IR-based rubber and an SBR, and in this case, the rubber component can comprise a rubber component other than IR-based rubbers and an SBR. Moreover, the rubber component may be one consisting of a rubber selected from IR-based rubbers and an SBR. Descriptions of the rubber component are as follows and are as described in the explanation for the rubber composition for clinch apex.

<<Content>>

A content ratio of an IR-based rubber in 100% by mass of the rubber component is, for example, greater than 10% by mass, preferably greater than 20% by mass, more preferably greater than 40% by mass, further preferably 50% by mass or more. On the other hand, the content is, for example, 100% by mass or less, preferably less than 90% by mass, more preferably less than 80% by mass. When the content is within the above-described ranges, the tensile strength of the rubber is improved and the tire becomes resistant to shocks from a road surface, so that ride comfort tends to be improved.

Moreover, a content of an SBR in 100% by mass of the rubber component is, for example, greater than 10% by mass, preferably greater than 20% by mass, more preferably greater than 30% by mass. On the other hand, the content is, for example, less than 90% by mass, preferably less than 80% by mass, more preferably less than 70% by mass, further preferably less than 60% by mass. When the content is within the above-described ranges, fuel efficiency tends to be improved.

Moreover, a total content of an IR-based rubber and an SBR in 100% by mass of the rubber component is preferably greater than 80% by mass, more preferably greater than 90% by mass, further preferably greater than 95% by mass, or may be 100% by mass.

(Filler)

The filler can comprise a recovered carbon black (rCB). Moreover, the filler can comprise carbon black other than an rCB or silica. In a case where the filler comprises silica, the filler can further comprise a silane coupling agent. The filler can further comprise another filler other than carbon black and silica. Descriptions of each component capable of constituting the filler are as described for the rubber composition for clinch apex.

<<Content of carbon black>>

A total content of carbon black comprising a recovered carbon black when compounded based on 100 parts by mass of the rubber component is preferably greater than 30 parts by mass, more preferably greater than 35% by mass, further preferably greater than 40 parts by mass. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack growth resistance tend to be obtained.

A content rate of the recovered carbon black in the total content of carbon black is, for example, greater than 10% by mass, preferably greater than 20% by mass, more preferably greater than 30% by mass, further preferably 40% by mass or more, from the viewpoint of reinforcing property. On the other hand, the content ratio is preferably less than 80% by mass, more preferably less than 70% by mass, further preferably less than 60% by mass.

Other than the above, for the carbon black (including the recovered carbon black), the explanation made for the rubber composition for clinch apex can be similarly applied.

<<Content of silica>>

A content of silica, when compounded, based on 100 parts by mass of the rubber component is, but not particularly limited to, preferably greater than 1 part by mass, preferably greater than 5 parts by mass, more preferably 10 parts by mass or more, further preferably greater than 20 parts by mass, from the viewpoint of securing fuel efficiency and ride comfort. Moreover, the content is preferably less than 150 parts by mass, more preferably less than 100 parts by mass, further preferably less than 50 parts by mass, further preferably less than 30 parts by mass, from the viewpoints of dispersibility of silica and processability.

<<Content of silane coupling agent>>

The explanation made for the rubber composition for clinch apex can be similarly applied to a content of a silane coupling agent in a case where the rubber composition comprises a silane coupling agent.

(Other compounding agents)

The explanation made for the rubber composition for clinch apex can be similarly applied to matters other than the matters described above.

[Rubber composition for inner liner]

Each component of a rubber composition for inner liner will be described. At least one tire member composed of the rubber composition comprising a recovered carbon black is preferably an inner liner, and it is preferable that the rubber composition constituting an inner liner comprises a rubber component comprising greater than 70% by mass and 100% by mass or less of a butyl-based rubber and that, in a case where a content of the butyl-based rubber in the rubber component is less than 100% by mass, the rubber component comprises an isoprene-based rubber.

(Rubber component)

The rubber component may be one consisting of a butyl-based rubber. The rubber component may comprise a rubber component other than butyl-based rubbers, and in this case, the rubber component preferably comprises an isoprene-based rubber. Descriptions of the rubber component are as follows and are as described in the explanation for the rubber composition for clinch apex.

<<Butyl-based rubber>>

Examples of butyl-based rubbers include a butyl rubber (IIR); a halogenated butyl rubber such as a brominated butyl rubber (Br-IIR), chlorinated butyl rubber (Cl-IIR), and the like; and the like. Among them, a halogenated butyl rubber is preferable and a brominated butyl rubber and a chlorinated butyl rubber are more preferable, from the viewpoint that sheet processability and air barrier property can be improved with good balance. They may be used alone, or two or more thereof may be used in combination.

As the butyl-based rubbers, in addition to a usual butyl-based rubber (a butyl-based rubber other than recycled butyl-based rubbers), a recycled butyl-based rubber can be used in combination. Since a content rate of a non-halogenated butyl rubber (regular butyl rubber) in a recycled butyl-based rubber is usually high, a good air barrier property and a good vulcanization rate can be secured by using the recycled butyl rubber in combination with a halogenated butyl rubber. The recycled butyl-based rubbers may be used alone, or two or more thereof may be used in combination.

In a case where the rubber component comprises another rubber component other than the butyl-based rubber, examples of such another rubber component include, for example, diene-based rubbers such as an isoprene-based rubber (IR-based rubber) a butadiene rubber (BR), a styrene-butadiene rubber (SBR), a styrene-isoprene-butadiene rubber (SIBR), a chloroprene rubber (CR), an acrylonitrile-butadiene rubber (NBR), and the like, and an IR-based rubber is preferable. The explanation made for the rubber composition for clinch apex can be similarly applied to these other rubber components. These other rubber components may be used alone, or two or more thereof may be used in combination.

<<Content>>

A content of a butyl-based rubber in 100% by mass of the rubber component is preferably greater than 70% by mass, more preferably greater than 75% by mass, further preferably 80% by mass or more, from the viewpoint of sufficient air barrier property. In a case where the rubber component comprises a butyl-based rubber and an IR-based rubber, a total content of the butyl-based rubber and the IR-based rubber is, for example, greater than 80% by mass, preferably greater than 85% by mass, more preferably greater than 90% by mass, further preferably greater than 95% by mass.

(Filler)

The filler can comprise a recovered carbon black (rCB). Moreover, the filler can comprise carbon black other than an rCB or silica. In a case where the filler comprises silica, the filler can further comprise a silane coupling agent. The filler can further comprise another filler other than carbon black and silica. Descriptions of each component capable of constituting the filler are as described for the rubber composition for clinch apex.

<<Content of carbon black>>

A total content of carbon black comprising a recovered carbon black when compounded based on 100 parts by mass of the rubber component is, for example, greater than 30 parts by mass, preferably greater than 40 parts by mass, more preferably 50 parts by mass or more, further preferably 60 parts by mass or more. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack growth resistance tend to be obtained.

A content rate of the recovered carbon black in the total content of carbon black is, for example, greater than 10% by mass, preferably greater than 20% by mass, more preferably greater than 30% by mass, further preferably 40% by mass or more, from the viewpoint of reinforcing property. On the other hand, the content ratio is preferably less than 80% by mass, more preferably less than 70% by mass, further preferably less than 60% by mass.

Other than the above, for the carbon black (including the recovered carbon black), the explanation made for the rubber composition for clinch apex can be similarly applied.

<<Content of silica>>

A content of silica, when compounded, based on 100 parts by mass of the rubber component is, but not particularly limited to, preferably greater than 1 part by mass, preferably greater than 5 parts by mass, more preferably greater than 10 parts by mass, further preferably greater than 20 parts by mass, from the viewpoint of securing fuel efficiency and ride comfort. Moreover, the content is preferably less than 150 parts by mass, more preferably less than 100 parts by mass, further preferably less than 50 parts by mass, further preferably less than 30 parts by mass, from the viewpoints of dispersibility of silica and processability.

<<Content of silane coupling agent>>

The explanation made for the rubber composition for clinch apex can be similarly applied to a content of a silane coupling agent in a case where the rubber composition comprises a silane coupling agent.

(Other compounding agents)

The explanation made for the rubber composition for clinch apex can be similarly applied to matters other than the matters described above.

<Other rubber members constituting tire>

In the present specification, the tire can comprise other rubber members other than the above-described rubber members. Such other rubber members are not particularly limited, and a variety of rubber members commonly used for a tire can be used.

In the present specification, various materials each having a carbon atom (for example, a rubber, oil, a resin component, a vulcanization accelerator, an antioxidant, a surfactant, and the like) may be derived from carbon dioxide in the atmosphere. Compounding substances of the present invention can be obtained by converting carbon dioxide directly or converting methane obtained via a process of methanation by which methane is synthesized from carbon dioxide.

<Application>

In the present specification, the tire can be appropriately used as a pneumatic tire, although the tire may be a pneumatic tire or a non-pneumatic tire. Moreover, in the present specification, the tire can be used for various applications, such as a tire for a passenger car, a tire for a large passenger car, a tire for a large SUV, a racing tire, a heavy-duty tire for a truck/bus and the like, a motorcycle tire, a high-performance tire, a run-flat tire. and the like. Besides, the tire for a passenger car refers to a tire that is presupposed to be mounted to a vehicle running with four wheels and that has a maximum load capacity of less than 1400 kg. Moreover, the heavy-duty tire refers to a tire having a maximum load capacity of 1400 kg or more. Moreover, in the present specification, the tire can be used as an all-season tire and a summer tire, as well as a winter tire such as a studless tire.

<Production method>

The tire relating to the present embodiment can be produced by a known method.

(Production of rubber composition)

Each of the above-described rubber compositions can be produced by a known method. For example, they can be produced by kneading the respective above-described components with a rubber kneading apparatus such as an open roll, a sealed type kneader (a Banbury mixer, a kneader, etc.), and the like. A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary. Examples of a kneading condition include, but not particularly limited to, for example, a method of kneading at a discharge temperature of 150°C to 170°C for 3 to 10 minutes in the base kneading step and kneading at 50°C to 110°C for 1 to 5 minutes in the final kneading step.

(Production of tire)

Each rubber composition obtained as described above is extruded into a desired shape of each of tire members at an unvulcanized stage, respectively, whereby an unvulcanized clinch apex, an unvulcanized sidewall, an unvulcanized insulation, and an unvulcanized inner liner can be produced. At least one member of the thus obtained clinch apex, sidewall, insulation, and inner liner are molded together with other tire members on a tire forming machine by a usual method, whereby an unvulcanized tire can be produced for the tire relating to the present embodiment. The tire can be obtained by heating and pressurizing (vulcanizing) this unvulcanized tire in a vulcanizing machine. Examples of a vulcanization condition include, but not particularly limited to, for example, a method of vulcanizing at 150 to 200°C for 5 to 30 minutes.

EXAMPLE

Hereinafter, examples considered to be preferable in implementing the present invention (Examples) will be described, though the scope of the present invention is not limited to only these Examples. Results, which are calculated based on evaluation methods described below considering a rubber composition and a tire obtained in accordance with each Table using various chemicals described below, are shown as durability indexes in a lower part of each Table.

<Materials>

Materials used in Examples and Comparative examples are collectively shown below.

Isoprene-based rubber: NR (TSR20)
BR: Ubepol BR 150B (manufactured by UBE Corporation, non-modified BR, cis content: 97 mol%, Mw: 440000)
SBR: SBR1502 (manufactured by JSR Corporation, styrene content: 23.5% by mass, vinyl content: 18 mol%, Mw: 500000)
Butyl-based rubber: Chlorobutyl HT1066 (manufactured by Exxon Mobil Corporation, chlorobutyl rubber)
Carbon black 1: SHOW BLACK N550 (manufactured by Cabot Japan K.K., $N_2SA$: 42 m$^2$/g; ash content: 1.0% by mass or less)
Carbon black 2: SHOW BLACK N660 (manufactured by Cabot Japan K.K., $N_2SA$: 35 m$^2$/g; ash content: 1.0% by mass or less)
Carbon black 3: SHOW BLACK N330 (manufactured by Cabot Japan K.K., $N_2SA$: 75 m$^2$/g; ash content: 1.0% by mass or less)
Silica: Ultrasil VN3 (manufactured by Evonik Industries AG, $N_2SA$: 175 m$^2$/g)
Recovered carbon black (rCB): Carbon black obtained by a pyrolysis process of a tire (ash content: 17% by mass)
Oil: Diana process NH-70S (manufactured by Idemitsu Kosan Co., Ltd., aromatic process oil)
Wax: OZOACE 0355 (manufactured by Nippon Seiro Co., Ltd, paraffinic one).
Antioxidant 1: Nocrac 6C (manufactured by Ouchi Shinko Chemical Industry Co., Ltd., (N-(1,3-dimethylbutyl)-N'-phenyl-p-phenylenediamine))
Antioxidant 2: Nocrac RD (manufactured by Ouchi Shinko Chemical Industry Co., Ltd., (poly(2,2,4-trimethyl-1,2-dihydroquinoline)))
Zinc oxide: Zinc oxide No. 2 (manufactured by Mitsui Mining & Smelting Co., Ltd.)
Stearic acid: Bead stearic acid "CAMELLIA" (manufactured by NOF CORPORATION)
Sulfur: HK-200-5 (manufactured by Hosoi Chemical Industry Co., Ltd., powdered sulfur, oil content: 5% by mass)
Vulcanization accelerator: Nocceler CZ (manufactured by Ouchi Shinko Chemical Industry Co., Ltd., (N-cyclohexyl-2-benzothiazolesulfenamide))

<Tire for which rubber composition for clinch apex is used>

According to the compounding formulations shown in Tables 1 and 2, using a 1.7 L closed Banbury mixer, chemicals other than sulfur and a vulcanization accelerator are kneaded for 5 minutes until a temperature reaches a discharge temperature at 170°C to obtain a kneaded product. Next, using a twin-screw open roll, the sulfur and vulcanization accelerator are added to the kneaded product, and the mixture is kneaded for 4 minutes until the temperature reaches 105°C to obtain an unvulcanized rubber composition. The unvulcanized rubber composition is molded into a shape of a clinch apex with an extruder equipped with a mouthpiece having a predetermined shape, which is attached together with other tire members to prepare an unvulcanized tire, and the unvulcanized tire is press-vulcanized under a condition at 170°C for 12 minutes, thereby producing each test tire.

<Tire for which rubber composition for sidewall is used>

According to the compounding formulations shown in Tables 3 and 4, using a 1.7 L closed Banbury mixer, chemicals other than sulfur and a vulcanization accelerator are kneaded for 5 minutes until a temperature reaches a discharge temperature at 170°C to obtain a kneaded product. Next, using a twin-screw open roll, the sulfur and vulcanization accelerator are added to the kneaded product, and the mixture is kneaded for 4 minutes until the temperature reaches 105°C to obtain an unvulcanized rubber composition. The unvulcanized rubber composition is molded into a shape of a sidewall with an extruder equipped with a mouthpiece having a predetermined shape, which is attached together with other tire members to prepare an unvulcanized tire, and the unvulcanized tire is press-vulcanized under a condition at 170°C for 12 minutes, thereby producing each test tire.

<Tire for which rubber composition for insulation is used>

According to the compounding formulations shown in Tables 5 and 6, using a 1.7 L closed Banbury mixer, chemicals other than sulfur and a vulcanization accelerator are kneaded at a discharge temperature at 150°C for 5 minutes. Next, the sulfur and vulcanization accelerator are added to an obtained kneaded product, and the mixture is kneaded with an open roll for 4 minutes until the temperature reaches 105°C to obtain an unvulcanized rubber composition. The unvulcanized rubber composition is molded into a shape of a sheet, which is attached together with other tire members to prepare an unvulcanized tire, and the unvulcanized tire is press-vulcanized under a condition at 170°C for 12 minutes, thereby producing each test tire.

<Tire for which rubber composition for inner liner is used>

According to the compounding formulations shown in Tables 7 and 8, using a 1.7 L closed Banbury mixer, chemicals other than sulfur and a vulcanization accelerator are kneaded for 4 minutes until a temperature reaches a discharge temperature at 160°C to obtain a kneaded product. Next, using a twin-screw open roll, the sulfur and vulcanization accelerator are added to the kneaded product, and the mixture is kneaded for 4 minutes until the temperature reaches 80°C to obtain an unvulcanized rubber composition. The unvulcanized rubber composition is molded into a shape of an inner liner, which is attached together with other tire members to prepare an unvulcanized tire, and the unvulcanized tire is press-vulcanized under a condition at 170°C for 12 minutes, thereby producing each test tire.

<Evaluation>

Results of evaluations of respective test tires by evaluation methods described below are described in the corresponding columns in each of the following Tables.

(Rolling resistance)

Each test tire is rim-assembled, and rolling resistance of each test tire is measured using a rolling resistance tester when the test tire was made to run at a speed (80 km/h) under a condition of an internal pressure (210 kPa) and a load (4.4 kN) in a case where a size of the tire is 175/70R14 or when the test tire was made to run at a speed (80 km/h) under a condition of an internal pressure (210 kPa) and a load (7.5 kN) in a case where a size of the tire is 235/70R16. The obtained value of rolling resistance is indicated as an index with the reference Comparative example being as 100. The results show that the larger the index is, the smaller the rolling resistance is and the more excellent the fuel efficiency is.

(Ride comfort)

Each test tire in mint condition is mounted on a predetermined vehicle, and an actual vehicle running is performed on a test course with a dry asphalt road surface. Ride comfort is evaluated based on feeling of each of test drivers during straight running, changing lanes, and accelerating/decelerating when running at 80 km/hour. The evaluations are performed using an integer value of 1 to 5 points, and based on evaluation criteria that the higher the score is, the more excellent the ride comfort is, a total score by 20 test drivers is calculated. In each of cases where a size of each tire is 175/70R14 and a size of each tire is 235/70R16, an evaluation result for each test tire is indicated as an index with a total score for the reference Comparative example being as 100. The results show that the higher the numerical value is, the better the ride comfort is.

Table 1

(Member: clinch apex; tire size: 175/70R14)

| | Example | | | Comparative example | | | |
|---|---|---|---|---|---|---|---|
| | 1-1 | 1-2 | 1-3 | 1-1 | 1-2 | 1-3 | 1-4 |
| **Compounding amount (parts by mass)** | | | | | | | |
| NR | 50 | 50 | 50 | 50 | 50 | 50 | 50 |
| BR | 50 | 50 | 50 | 50 | 50 | 50 | 50 |
| Carbon black 3 | 40 | 40 | 30 | 40 | 25 | 40 | 25 |
| rCB | 20 | 20 | 20 | 20 | 20 | 20 | 20 |
| Wax | 1.2 | 1.2 | 1.2 | 1.2 | 1.2 | 1.2 | 1.2 |
| Antioxidant 1 | 2.0 | 2.0 | 2.0 | 2.0 | 2.0 | 2.0 | 2.0 |
| Antioxidant 2 | 1.5 | 1.5 | 1.5 | 1.5 | 1.5 | 1.5 | 1.5 |
| Oil | 8 | 8 | 8 | 8 | 8 | 8 | 8 |
| Zinc oxide | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |
| Sulfur | 2.5 | 2.5 | 2.5 | 2.5 | 2.5 | 2.5 | 2.5 |
| Vulcanization accelerator | 2.5 | 2.5 | 2.5 | 2.5 | 2.5 | 2.5 | 2.5 |
| **Tire properties** | | | | | | | |
| G [kg] | 6.5 | 5.8 | 6.5 | 7.5 | 7.5 | 6.0 | 6.5 |
| $W_L$ [kg] | 529 | 529 | 529 | 529 | 529 | 529 | 529 |
| $W_{SW}$ [mm] | 2.3 | 2.0 | 2.3 | 2.3 | 1.3 | 1.6 | 2.3 |
| Thickness of clinch apex [mm] | 4.5 | 4.5 | 4.5 | 8.0 | 8.0 | 4.5 | 4.5 |
| W [mm] | 7.1 | 6.8 | 7.1 | 7.1 | 7.1 | 6.4 | 7.1 |
| $G/W_L$ | 0.0123 | 0.0110 | 0.0123 | 0.0142 | 0.0142 | 0.0096 | 0.0123 |

| | Example | | | Comparative example | | | |
|---|---|---|---|---|---|---|---|
| | 1-1 | 1-2 | 1-3 | 1-1 | 1-2 | 1-3 | 1-4 |
| **Tire properties** | | | | | | | |
| $(G/W_L) \times W_{SW}$ | 0.0283 | 0.0219 | 0.0283 | 0.0326 | 0.0185 | 0.0181 | 0.0283 |
| (Total content of rubbers comprising an isoprene unit)×(Total content of CB) | 3000 | 3000 | 2500 | 3000 | 2250 | 3000 | 2250 |
| H2/H1 | 0.10 | 0.10 | 0.10 | 0.10 | 0.10 | 0.10 | 0.10 |
| $(G/W_L) \times W$ | 0.087 | 0.075 | 0.087 | 0.101 | 0.101 | 0.073 | 0.087 |
| **Performance** | | | | | | | |
| Fuel efficiency index | 97 | 102 | 101 | 88 | 92 | 100 | 106 |
| Ride comfort index | 105 | 103 | 101 | 108 | 106 | 100 | 94 |
| Overall performance index | 202 | 205 | 202 | 196 | 198 | 200 | 200 |

Table 2

(Member: clinch apex; tire size: 235/70R16)

| | Example | | | Comparative example | | | |
|---|---|---|---|---|---|---|---|
| | 1-4 | 1-5 | 1-6 | 1-5 | 1-6 | 1-7 | |
| **Compounding amount (parts by mass)** | | | | | | | |
| NR | 50 | 50 | 50 | 50 | 50 | 50 | |

(continued)

| (Member: clinch apex; tire size: 235/70R16) | | | | | | |
|---|---|---|---|---|---|---|
| | Example | | | Comparative example | | |
| | 1-4 | 1-5 | 1-6 | 1-5 | 1-6 | 1-7 |
| Compounding amount (parts by mass) | | | | | | |
| BR | 50 | 50 | 50 | 50 | 50 | 50 |
| Carbon black 3 | 40 | 40 | 30 | 40 | 40 | 25 |
| rCB | 20 | 20 | 20 | 20 | 20 | 20 |
| Wax | 1.2 | 1.2 | 1.2 | 1.2 | 1.2 | 1.2 |
| Antioxidant 1 | 2.0 | 2.0 | 2.0 | 2.0 | 2.0 | 2.0 |
| Antioxidant 2 | 1.5 | 1.5 | 1.5 | 1.5 | 1.5 | 1.5 |
| Oil | 8 | 8 | 8 | 8 | 8 | 8 |
| Zinc oxide | 3.0 | 3.0 | 3.0 | 3.0 | 3.0 | 3.0 |
| Stearic acid | 2.0 | 2.0 | 2.0 | 2.0 | 2.0 | 2.0 |
| Sulfur | 2.5 | 2.5 | 2.5 | 2.5 | 2.5 | 2.5 |
| Vulcanization accelerator | 2.5 | 2.5 | 2.5 | 2.5 | 2.5 | 2.5 |
| Tire properties | | | | | | |
| G [kg] | 11.5 | 11.5 | 11.5 | 13.0 | 11.0 | 11.5 |
| $W_L$ [kg] | 938 | 938 | 938 | 938 | 938 | 938 |
| $W_{SW}$ [mm] | 2.0 | 3.0 | 3.0 | 5.0 | 1.6 | 2.3 |
| Thickness of clinch apex [mm] | 4.5 | 4.5 | 4.5 | 5.0 | 3.5 | 4.5 |
| W [mm] | 7.2 | 8.2 | 8.2 | 10.2 | 6.8 | 7.5 |
| $G/W_L$ | 0.0123 | 0.0123 | 0.0123 | 0.0139 | 0.0117 | 0.0123 |
| | Example | | | Comparative example | | |
| | 1-4 | 1-5 | 1-6 | 1-5 | 1-6 | 1-7 |
| Tire properties | | | | | | |
| $(G/W_L) \times W_{SW}$ | 0.0245 | 0.0368 | 0.0368 | 0.0693 | 0.0188 | 0.0282 |
| (Total content of rubbers comprising an isoprene unit)×(Total content of CB) | 3000 | 3000 | 2500 | 3000 | 3000 | 2250 |
| H2/H1 | 0.20 | 0.20 | 0.20 | 0.20 | 0.20 | 0.20 |
| $(G/W_L) \times W$ | 0.088 | 0.101 | 0.101 | 0.141 | 0.080 | 0.092 |
| Performance | | | | | | |
| Fuel efficiency index | 111 | 108 | 115 | 100 | 105 | 117 |
| Ride comfort index | 94 | 99 | 94 | 100 | 93 | 83 |
| Overall performance index | 205 | 207 | 209 | 200 | 198 | 200 |

Table 3

| (Member: sidewall; tire size: 175/70R14) | | | | | | |
|---|---|---|---|---|---|---|
| | Example | | | Comparative example | | |
| | 2-1 | 2-2 | 2-1 | 2-2 | 2-3 | 2-4 |
| Compounding amount (parts by mass) | | | | | | |
| NR | 50 | 50 | 50 | 50 | 50 | 50 |
| BR | 50 | 50 | 50 | 50 | 50 | 50 |
| Carbon black 1 | 30 | 30 | 30 | 25 | 30 | 25 |
| rCB | 20 | 20 | 20 | 20 | 20 | 20 |
| Silica | - | - | - | - | - | - |
| Wax | 1.2 | 1.2 | 1.2 | 1.2 | 1.2 | 1.2 |

(continued)

| (Member: sidewall; tire size: 175/70R14) | | | | | | |
|---|---|---|---|---|---|---|
| | Example | | Comparative example | | | |
| | 2-1 | 2-2 | 2-1 | 2-2 | 2-3 | 2-4 |
| Compounding amount (parts by mass) | | | | | | |
| Antioxidant 1 | 3.0 | 3.0 | 3.0 | 3.0 | 3.0 | 3.0 |
| Antioxidant 2 | 1.5 | 1.5 | 1.5 | 1.5 | 1.5 | 1.5 |
| Oil | 5 | 5 | 5 | 5 | 5 | 5 |
| Zinc oxide | 3.0 | 3.0 | 3.0 | 3.0 | 3.0 | 3.0 |
| Stearic acid | 2.0 | 2.0 | 2.0 | 2.0 | 2.0 | 2.0 |
| Sulfur | 1.5 | 1.5 | 1.5 | 1.5 | 1.5 | 1.5 |
| Vulcanization accelerator | 0.8 | 0.8 | 0.8 | 0.8 | 0.8 | 0.8 |
| Tire properties | | | | | | |
| G [kg] | 6.5 | 6.0 | 7.1 | 7.1 | 6.0 | 6.5 |
| $W_L$ [kg] | 529 | 529 | 529 | 529 | 529 | 529 |
| $W_{SW}$ [mm] | 2.3 | 2.0 | 4.0 | 1.3 | 1.6 | 2.3 |
| W [mm] | 7.1 | 6.8 | 8.8 | 8.8 | 6.6 | 7.1 |
| $G/W_L$ | 0.0123 | 0.0113 | 0.0134 | 0.0134 | 0.0113 | 0.0123 |
| | Example | | Comparative example | | | |
| | 2-1 | 2-2 | 2-1 | 2-2 | 2-3 | 2-4 |
| Tire properties | | | | | | |
| $(G/W_L) \times W_{SW}$ | 0.0283 | 0.0227 | 0.0537 | 0.0174 | 0.0181 | 0.0283 |
| (Total content of rubbers comprising an isoprene unit)×(Total content of CB) | 2500 | 2500 | 2500 | 2250 | 2500 | 2250 |
| H2/H1 | 0.10 | 0.10 | 0.10 | 0.10 | 0.10 | 0.10 |
| $(G/W_L) \times W$ | 0.087 | 0.077 | 0.118 | 0.118 | 0.075 | 0.087 |
| Performance | | | | | | |
| Fuel efficiency index | 100 | 103 | 91 | 96 | 102 | 100 |
| Ride comfort index | 104 | 103 | 108 | 104 | 98 | 100 |
| Overall performance index | 204 | 206 | 199 | 200 | 200 | 200 |

Table 4

| (Member: sidewall; tire size: 235/70R16) | | | | | | | |
|---|---|---|---|---|---|---|---|
| | Example | | | | Comparative example | | |
| | 2-3 | 2-4 | 2-5 | 2-6 | 2-5 | 2-6 | 2-7 |
| Compounding amount (parts by mass) | | | | | | | |
| NR | 50 | 50 | 50 | 50 | 50 | 50 | 50 |
| BR | 50 | 50 | 50 | 50 | 50 | 50 | 50 |
| Carbon black 1 | 30 | 30 | 20 | 20 | 30 | 30 | 25 |
| rCB | 20 | 20 | 20 | 20 | 20 | 20 | 20 |
| Silica | - | - | 10 | 20 | - | - | - |
| Wax | 1.2 | 1.2 | 1.2 | 1.2 | 1.2 | 1.2 | 1.2 |
| Antioxidant 1 | 3.0 | 3.0 | 3.0 | 3.0 | 3.0 | 3.0 | 3.0 |
| Antioxidant 2 | 1.5 | 1.5 | 1.5 | 1.5 | 1.5 | 1.5 | 1.5 |
| Oil | 5 | 5 | 5 | 5 | 5 | 5 | 5 |
| Zinc oxide | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |

(continued)

| (Member: sidewall; tire size: 235/70R16) | | | | | | |
|---|---|---|---|---|---|---|
| | Example | | | | Comparative example | |
| | 2-3 | 2-4 | 2-5 | 2-6 | 2-5 | 2-6 | 2-7 |
| Compounding amount (parts by mass) | | | | | | |
| Sulfur | 1.5 | 1.5 | 1.5 | 1.5 | 1.5 | 1.5 | 1.5 |
| Vulcanization accelerator | 0.8 | 0.8 | 0.8 | 0.8 | 0.8 | 0.8 | 0.8 |
| Tire properties | | | | | | |
| G [kg] | 11.4 | 11.4 | 11.4 | 11.4 | 13.0 | 11.0 | 11.4 |
| $W_L$ [kg] | 938 | 938 | 938 | 938 | 938 | 938 | 938 |
| $W_{SW}$ [mm] | 2.0 | 3.0 | 3.0 | 3.0 | 5.0 | 1.6 | 3.0 |
| W [mm] | 7.2 | 8.2 | 8.2 | 8.2 | 10.2 | 7.1 | 7.8 |
| $G/W_L$ | 0.0122 | 0.0122 | 0.0122 | 0.0122 | 0.0139 | 0.0117 | 0.0122 |

| | Example | | | | Comparative example | |
|---|---|---|---|---|---|---|
| | 2-3 | 2-4 | 2-5 | 2-6 | 2-5 | 2-6 | 2-7 |
| Tire properties | | | | | | |
| $(G/W_L)\times W_{SW}$ | 0.0243 | 0.0365 | 0.0365 | 0.0365 | 0.0693 | 0.0188 | 0.0365 |
| (Total content of rubbers comprising an isoprene unit)×(Total content of CB) | 2500 | 2500 | 2500 | 2500 | 2500 | 2500 | 2250 |
| H2/H1 | 0.20 | 0.20 | 0.20 | 0.20 | 0.20 | 0.20 | 0.20 |
| $(G/W_L)\times W$ | 0.088 | 0.100 | 0.100 | 0.100 | 0.141 | 0.083 | 0.095 |
| Performance | | | | | | |
| Fuel efficiency index | 104 | 102 | 104 | 100 | 89 | 100 | 96 |
| Ride comfort index | 104 | 110 | 112 | 114 | 108 | 100 | 100 |
| Overall performance index | 208 | 212 | 216 | 214 | 197 | 200 | 196 |

Table 5

| (Member: insulation; tire size: 175/70R14) | | | | | | |
|---|---|---|---|---|---|---|
| | Example | | | Comparative example | | |
| | 3-1 | 3-2 | 3-3 | 3-1 | 3-2 | 3-3 | 3-4 |
| Compounding amount (parts by mass) | | | | | | |
| NR | 70 | 70 | 70 | 70 | 60 | 70 | 60 |
| SBR | 30 | 30 | 30 | 30 | 40 | 30 | 40 |
| Carbon black 2 | 40 | 40 | 20 | 40 | 20 | 40 | 20 |
| rCB | 20 | 20 | 20 | 20 | 20 | 20 | 20 |
| Oil | 10 | 10 | 10 | 10 | 10 | 10 | 10 |
| Zinc oxide | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 |
| Vulcanization accelerator | 1.0 | 1.0 | 1.0 | 1.0 | 1.0 | 1.0 | 1.0 |
| Tire properties | | | | | | |
| G [kg] | 6.3 | 6.0 | 6.3 | 6.9 | 6.9 | 6.0 | 6.3 |
| $W_L$ [kg] | 529 | 529 | 529 | 529 | 529 | 529 | 529 |
| $W_{SW}$ [mm] | 2.3 | 2.0 | 2.3 | 2.3 | 1.3 | 1.6 | 2.3 |
| Thickness of insulation [mm] | 0.6 | 0.4 | 0.6 | 0.9 | 0.9 | 0.3 | 0.6 |
| W [mm] | 7.1 | 6.6 | 7.1 | 7.7 | 7.7 | 6.6 | 7.1 |

(continued)

| Tire properties | | | | | | | |
|---|---|---|---|---|---|---|---|
| G/W$_L$ | 0.0119 | 0.0113 | 0.0119 | 0.0130 | 0.0130 | 0.0113 | 0.0119 |
| (G/W$_L$)×W$_{SW}$ | 0.0274 | 0.0227 | 0.0274 | 0.0300 | 0.0169 | 0.0181 | 0.0274 |

(Continued on the next page)

| | Example | | | Comparative example | | | |
|---|---|---|---|---|---|---|---|
| | 3-1 | 3-2 | 3-3 | 3-1 | 3-2 | 3-3 | 3-4 |
| **Tire properties** | | | | | | | |
| (Total content of rubbers comprising an isoprene unit)×(Total content of CB) | 4200 | 4200 | 2800 | 4200 | 2400 | 4200 | 2400 |
| H2/H1 | 0.10 | 0.10 | 0.10 | 0.10 | 0.10 | 0.10 | 0.10 |
| (G/W$_L$)×W | 0.085 | 0.075 | 0.085 | 0.100 | 0.100 | 0.075 | 0.085 |
| **Performance** | | | | | | | |
| Fuel efficiency index | 96 | 98 | 108 | 91 | 97 | 94 | 100 |
| Ride comfort index | 106 | 106 | 96 | 107 | 99 | 104 | 100 |
| Overall performance index | 202 | 204 | 204 | 198 | 196 | 198 | 200 |

Table 6

(Member: insulation; tire size: 235/70R16)

| | Example | | | Comparative example | | |
|---|---|---|---|---|---|---|
| | 3-4 | 3-5 | 3-6 | 3-5 | 3-6 | 3-7 |
| **Compounding amount (parts by mass)** | | | | | | |
| NR | 70 | 70 | 70 | 70 | 70 | 60 |
| SBR | 30 | 30 | 30 | 30 | 30 | 40 |
| Carbon black 2 | 40 | 40 | 20 | 40 | 40 | 20 |
| rCB | 20 | 20 | 20 | 20 | 20 | 20 |
| Oil | 10 | 10 | 10 | 10 | 10 | 10 |
| Zinc oxide | 2.0 | 2.0 | 2.0 | 2.0 | 2.0 | 2.0 |
| Stearic acid | 2.0 | 2.0 | 2.0 | 2.0 | 2.0 | 2.0 |
| Sulfur | 1.5 | 1.5 | 1.5 | 1.5 | 1.5 | 1.5 |
| Vulcanization accelerator | 1.0 | 1.0 | 1.0 | 1.0 | 1.0 | 1.0 |
| **Tire properties** | | | | | | |
| G [kg] | 11.5 | 11.5 | 11.5 | 13.0 | 11.0 | 11.5 |
| W$_L$ [kg] | 938 | 938 | 938 | 938 | 938 | 938 |
| W$_{SW}$ [mm] | 2.0 | 3.0 | 3.0 | 2.3 | 1.6 | 2.3 |
| Thickness of insulation [mm] | 0.4 | 0.4 | 0.4 | 0.6 | 0.4 | 1.0 |
| W [mm] | 7.0 | 8.0 | 8.0 | 7.5 | 6.8 | 8.3 |
| G/W$_L$ | 0.0123 | 0.0123 | 0.0123 | 0.0139 | 0.0117 | 0.0123 |
| (G/W$_L$)×W$_{SW}$ | 0.0245 | 0.0368 | 0.0368 | 0.0319 | 0.0188 | 0.0282 |

(C ontinued on the next page)

| | Example | | | Com parative exam ple | | |
|---|---|---|---|---|---|---|
| | 3-4 | 3-5 | 3-6 | 3-5 | 3-6 | 3-7 |
| **Tire properties** | | | | | | |
| (Total content of rubbers comprising an isoprene unit)×(Total content of CB) | 4200 | 4200 | 2800 | 4200 | 4200 | 2400 |
| H2/H1 | 0.20 | 0.20 | 0.20 | 0.20 | 0.20 | 0.20 |
| (G/W$_L$)×W | 0.086 | 0.098 | 0.098 | 0.104 | 0.080 | 0.102 |

(continued)

| Performance | | | | | | |
|---|---|---|---|---|---|---|
| Fuel efficiency index | 95 | 93 | 102 | 85 | 88 | 100 |
| Ride comfort index | 112 | 117 | 104 | 113 | 109 | 100 |
| Overall performance index | 207 | 210 | 206 | 198 | 197 | 200 |

Table 7

| (Member: inner liner; tire size: 175/70R14) | | | | | | |
|---|---|---|---|---|---|---|
| | Example | | | Comparative example | | |
| | 4-1 | 4-2 | 4-3 | 4-1 | 4-2 | 4-3 | 4-4 |
| Compounding amount (parts by mass) | | | | | | |
| NR | 10 | 10 | 10 | 10 | 10 | 10 | 10 |
| Butyl-based rubber | 90 | 90 | 90 | 90 | 90 | 90 | 90 |
| Carbon black 2 | 40 | 40 | 20 | 40 | 15 | 40 | 15 |
| rCB | 20 | 20 | 10 | 20 | 9 | 20 | 9 |
| Antioxidant 2 | 1.0 | 1.0 | 1.0 | 1.0 | 1.0 | 1.0 | 1.0 |
| Oil | 8 | 8 | 8 | 8 | 8 | 8 | 8 |
| Zinc oxide | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 |
| Vulcanization accelerator | 0.5 | 0.5 | 0.5 | 0.5 | 0.5 | 0.5 | 0.5 |
| Tire properties | | | | | | |
| G [kg] | 6.5 | 6.0 | 6.5 | 7.0 | 7.0 | 6.0 | 6.5 |
| $W_L$ [kg] | 529 | 529 | 529 | 529 | 529 | 529 | 529 |
| $W_{SW}$ [mm] | 2.3 | 2.0 | 2.3 | 2.3 | 1.3 | 1.7 | 2.3 |
| Thickness of inner liner [mm] | 1.5 | 1.1 | 1.5 | 2.0 | 2.0 | 1.0 | 1.5 |
| W [mm] | 7.1 | 6.6 | 7.1 | 7.5 | 7.5 | 6.0 | 7.0 |
| $G/W_L$ | 0.0123 | 0.0113 | 0.0123 | 0.0132 | 0.0132 | 0.0113 | 0.0123 |
| $(G/W_L) \times W_{SW}$ | 0.0283 | 0.0227 | 0.0283 | 0.0304 | 0.0172 | 0.0193 | 0.0283 |

(Contin on the next page)

| | Example | | | Comparative example | | |
|---|---|---|---|---|---|---|
| | 4-1 | 4-2 | 4-3 | 4-1 | 4-2 | 4-3 | 4-4 |
| Tire properties | | | | | | |
| (Total content of rubbers comprising an isoprene unit)×(Total content of CB) | 6000 | 6000 | 3000 | 6000 | 2400 | 6000 | 2400 |
| H2/H1 | 0.10 | 0.10 | 0.10 | 0.10 | 0.10 | 0.10 | 0.10 |
| $(G/W_L) \times W$ | 0.087 | 0.075 | 0.087 | 0.099 | 0.099 | 0.068 | 0.086 |
| Performance | | | | | | |
| Fuel efficiency index | 109 | 114 | 120 | 99 | 115 | 100 | 117 |
| Ride comfort index | 94 | 93 | 87 | 96 | 82 | 100 | 83 |
| Overall performance index | 203 | 208 | 206 | 195 | 197 | 200 | 200 |

Table 8

| (Member: inner liner; tire size: 235/70R16) | | | | | | |
|---|---|---|---|---|---|---|
| | Example | | | Comparative example | | |
| | 4-4 | 4-5 | 4-6 | 4-5 | 4-6 | 4-7 |
| Compounding amount (parts by mass) | | | | | | |
| NR | 10 | 10 | 10 | 10 | 10 | 10 |
| Butyl-based rubber | 90 | 90 | 90 | 90 | 90 | 90 |
| Carbon black 2 | 40 | 40 | 20 | 40 | 40 | 15 |
| rCB | 20 | 20 | 10 | 20 | 20 | 9 |
| Antioxidant 2 | 1.0 | 1.0 | 1.0 | 1.0 | 1.0 | 1.0 |
| Oil | 8 | 8 | 8 | 8 | 8 | 8 |
| Zinc oxide | 1.5 | 1.5 | 1.5 | 1.5 | 1.5 | 1.5 |
| Stearic acid | 1.5 | 1.5 | 1.5 | 1.5 | 1.5 | 1.5 |
| Sulfur | 1.5 | 1.5 | 1.5 | 1.5 | 1.5 | 1.5 |
| Vulcanization accelerator | 0.5 | 0.5 | 0.5 | 0.5 | 0.5 | 0.5 |
| Tire properties | | | | | | |
| $G$ [kg] | 11.5 | 11.5 | 11.5 | 13.0 | 11.0 | 11.5 |
| $W_L$ [kg] | 938 | 938 | 938 | 938 | 938 | 938 |
| $W_{SW}$ [mm] | 2.0 | 3.0 | 3.0 | 5.0 | 1.6 | 2.3 |
| Thickness of inner liner [mm] | 1.1 | 1.1 | 1.1 | 2.0 | 1.0 | 1.5 |
| $W$ [mm] | 6.6 | 8.0 | 8.0 | 10.6 | 6.2 | 7.4 |
| $G/W_L$ | 0.0123 | 0.0123 | 0.0123 | 0.0139 | 0.0117 | 0.0123 |
| $(G/W_L) \times W_{SW}$ | 0.0245 | 0.0368 | 0.0368 | 0.0693 | 0.0188 | 0.0282 |

(Continued on the next page)

| | Example | | | Comparative example | | |
|---|---|---|---|---|---|---|
| | 4-4 | 4-5 | 4-6 | 4-5 | 4-6 | 4-7 |
| Tire properties | | | | | | |
| (Total content of rubbers comprising an isoprene unit)$\times$(Total content of CB) | 6000 | 6000 | 3000 | 6000 | 6000 | 2400 |
| H2/H1 | 0.20 | 0.20 | 0.20 | 0.20 | 0.20 | 0.20 |
| $(G/W_L) \times W$ | 0.081 | 0.098 | 0.098 | 0.147 | 0.073 | 0.091 |
| Performance | | | | | | |
| Fuel efficiency index | 104 | 102 | 116 | 91 | 100 | 111 |
| Ride comfort index | 103 | 107 | 100 | 104 | 100 | 88 |
| Overall performance index | 207 | 209 | 213 | 195 | 200 | 198 |

<Embodiments>

Preferred embodiments are described below.

[1] A tire comprising a pair of sidewall parts,

wherein each of the sidewall parts comprises at least one tire member composed of a rubber composition comprising a recovered carbon black, and
wherein $W_{SW}$, G, $W_L$, $A_{IPU}$, and $A_{CB}$ satisfy the following inequalities (1), (2), and (3) simultaneously,

$$(1)\ G/W_L < 0.0130,$$

$$(2)\ (G/W_L)\times W_{SW} \geq 0.020,$$

$$(3)\ A_{IPU}\times A_{CB} \geq 2500,$$

where $W_{SW}$ represents a thickness, in mm, at a tire maximum width position, of a sidewall rubber constituting the sidewall parts, G represents a weight, in kg, of the tire, $W_L$ represents a maximum load capacity, in kg, of the tire, $A_{IPU}$ represents a total content, in % by mass, of rubbers comprising an isoprene unit in a rubber component in the rubber composition, and $A_{CB}$ represents a total content, in parts by mass, of carbon black comprising a recovered carbon black based on 100 parts by mass of the rubber component.

[2] The tire of [1] above, wherein the right side of the inequality (1) is 0.0126.
[3] The tire of [1] above, wherein the right side of the inequality (1) is 0.0124, preferably 0.0122.
[4] The tire of any one of [1] to [3] above, wherein a value of $W_L$ is greater than 535.
[5] The tire of any one of [1] to [4] above, wherein the right side of the inequality (2) is 0.022, preferably 0.025.
[6] The tire of any one of [1] to [4] above, wherein the right side of the inequality (2) is 0.030, preferably 0.034, more preferably 0.040.
[7] The tire of any one of [1] to [6] above,

wherein the at least one tire member composed of the rubber composition comprising a recovered carbon black is a clinch apex,
wherein the rubber composition constituting the clinch apex comprises a rubber component that comprises greater than 20% by mass and 100% by mass or less of an isoprene-based rubber, and
wherein, in a case where a content of the isoprene-based rubber in the rubber component is less than 100% by mass, the rubber component comprises at least one of a butadiene rubber and a styrene-butadiene rubber.

[8] The tire of any one of [1] to [6] above,

wherein the at least one tire member composed of the rubber composition comprising a recovered carbon black is a sidewall, and
wherein the rubber composition constituting the sidewall comprises greater than 20% by mass and less than 80% by mass of an isoprene-based rubber and at least one of a butadiene rubber and a styrene-butadiene rubber.

[9] The tire of any one of [1] to [6] above,

wherein the at least one tire member composed of the rubber composition comprising a recovered carbon black is an insulation,
wherein the rubber composition constituting the insulation comprises a rubber component that comprises greater than 20% by mass and 100% by mass or less of an isoprene-based rubber, and
wherein, in a case where a content of the isoprene-based rubber in the rubber component is less than 100% by mass, the rubber component comprises at least one of a butadiene rubber and a styrene-butadiene rubber.

[10] The tire of any one of [1] to [6] above,

wherein the at least one tire member composed of the rubber composition comprising a recovered carbon black is an inner liner,
wherein the rubber composition constituting the inner liner comprises a rubber component that comprises greater than 70% by mass and 100% by mass or less of a butyl-based rubber, and
wherein, in a case where a content of the butyl-based rubber in the rubber component is less than 100% by mass, the rubber component comprises an isoprene-based rubber.

[11] The tire of [8] above,

wherein the rubber composition constituting the sidewall comprises silica, and
wherein $A_{rCB}$ and $A_{SIL}$ satisfy the following inequality (4), and the right side of the inequality (4) is preferably 0.80, more preferably 0.70,

$$(4)\ A_{SIL}/A_{rCB} < 1,$$

where $A_{rCB}$ represent a content, in parts by mass, of the recovered carbon black in the rubber composition constituting the sidewall and $A_{SIL}$ represents a content, in parts by mass, of silica in the rubber composition constituting the sidewall.

[12] The tire of any one of [1] to [11] above,

wherein W, G, and $W_L$ satisfy the following inequality (5), and the right side of the inequality (5) is preferably 0.075, more preferably 0.080, further preferably 0.085,

$$(5)\ (G/W_L)×W \geq 0.070,$$

where W represents a total thickness, in mm, of the sidewall part at a position where a width of the tire becomes maximum in a direction of a tire rotation axis.

[13] The tire of any one of [1] to [12] above,

wherein the tire comprises a pair of bead cores and a bead filler adjacent to the bead cores, and
wherein H2/H1 is 0.08 or more, preferably 0.09 or more, more preferably 0.10 or more, further preferably 0.11 or more and is 0.30 or less, preferably 0.25 or less, more preferably 0.23 or less, further preferably 0.22 or less, where H1 represents a tire cross-sectional height, in mm, and H2 represents a height, in mm, of the bead filler based on an interface with the bead core.

[14] The tire of [7] to [8] above, wherein a total content, in % by mass, of the isoprene-based rubber and the butadiene rubber in the rubber component is greater than 90% by mass.
[15] The tire of [9] above, wherein a total content, in % by mass, of the isoprene-based rubber and the styrene-butadiene rubber in the rubber component is greater than 90% by mass.
[16] The tire of [10] above, wherein a total content, in % by mass, of the butyl-based rubber and the isoprene-based rubber in the rubber component is greater than 90% by mass.

REFERENCE SIGNS LIST

| 1 | Tire |
| 2 | Clinch apex |
| 3 | Sidewall rubber |
| 4 | Insulation rubber |
| 5 | Inner liner rubber |
| 6 | Bead core |
| 7 | Bead filler |
| 8 | Carcass |
| CL | Tire equatorial plane |
| H1 | Tire cross-sectional height |
| H2 | Height of bead filler |
| BBL | Bead baseline |
| R | Rim |
| W | Total thickness of sidewall part at tire maximum width position |
| $W_{SW}$ | Thickness of sidewall rubber at tire maximum width position |

**Claims**

1.  A tire comprising a pair of sidewall parts,

    wherein each of the sidewall parts comprises at least one tire member composed of a rubber composition comprising a recovered carbon black, and

wherein $W_{SW}$, G, $W_L$, $A_{IPU}$, and $A_{CB}$ satisfy the following inequalities (1), (2), and (3) simultaneously,

$$(1)\ G/W_L < 0.0130,$$

$$(2)\ (G/W_L) \times W_{SW} \geq 0.020,$$

$$(3)\ A_{IPU} \times A_{CB} \geq 2500,$$

where $W_{SW}$ represents a thickness, in mm, at a tire maximum width position, of a sidewall rubber constituting the sidewall parts, G represents a weight, in kg, of the tire, $W_L$ represents a maximum load capacity, in kg, of the tire, $A_{IPU}$ represents a total content, in % by mass, of rubbers comprising an isoprene unit in a rubber component in the rubber composition, and $A_{CB}$ represents a total content, in parts by mass, of carbon black comprising a recovered carbon black based on 100 parts by mass of the rubber component.

2. The tire of claim 1, wherein the right side of the inequality (1) is 0.0126.

3. The tire of claim 1, wherein the right side of the inequality (1) is 0.0124.

4. The tire of any one of claims 1 to 3, wherein a value of $W_L$ is greater than 535.

5. The tire of any one of claims 1 to 4, wherein the right side of the inequality (2) is 0.022.

6. The tire of any one of claims 1 to 4, wherein the right side of the inequality (2) is 0.030.

7. The tire of any one of claims 1 to 6,

   wherein the at least one tire member composed of the rubber composition comprising a recovered carbon black is a clinch apex,
   wherein the rubber composition constituting the clinch apex comprises a rubber component that comprises greater than 20% by mass and 100% by mass or less of an isoprene-based rubber, and
   wherein, in a case where a content of the isoprene-based rubber in the rubber component is less than 100% by mass, the rubber component comprises at least one of a butadiene rubber and a styrene-butadiene rubber.

8. The tire of any one of claims 1 to 6,

   wherein the at least one tire member composed of the rubber composition comprising a recovered carbon black is a sidewall, and
   wherein the rubber composition constituting the sidewall comprises greater than 20% by mass and less than 80% by mass of an isoprene-based rubber and at least one of a butadiene rubber and a styrene-butadiene rubber.

9. The tire of any one of claims 1 to 6,

   wherein the at least one tire member composed of the rubber composition comprising a recovered carbon black is an insulation,
   wherein the rubber composition constituting the insulation comprises a rubber component that comprises greater than 20% by mass and 100% by mass or less of an isoprene-based rubber, and
   wherein, in a case where a content of the isoprene-based rubber in the rubber component is less than 100% by mass, the rubber component comprises at least one of a butadiene rubber and a styrene-butadiene rubber.

10. The tire of any one of claims 1 to 6,

    wherein the at least one tire member composed of the rubber composition comprising a recovered carbon black is an inner liner,
    wherein the rubber composition constituting the inner liner comprises a rubber component that comprises greater than 70% by mass and 100% by mass or less of a butyl-based rubber, and
    wherein, in a case where a content of the butyl-based rubber in the rubber component is less than 100% by mass, the rubber component comprises an isoprene-based rubber.

11. The tire of claim 8,

wherein the rubber composition constituting the sidewall comprises silica, and
wherein $A_{rCB}$ and $A_{SIL}$ satisfy the following inequality (4),

$$(4)\ A_{SIL}/A_{rCB} < 1,$$

where $A_{rCB}$ represent a content, in parts by mass, of the recovered carbon black in the rubber composition constituting the sidewall and $A_{SIL}$ represents a content, in parts by mass, of silica in the rubber composition constituting the sidewall.

12. The tire of any one of claims 1 to 11,

wherein W, G, and $W_L$ satisfy the following inequality (5),

$$(5)\ (G/W_L) \times W \geq 0.070,$$

where W represents a total thickness, in mm, of the sidewall part at a position where a width of the tire becomes maximum in a direction of a tire rotation axis.

13. The tire of any one of claims 1 to 12,

wherein the tire comprises a pair of bead cores and a bead filler adjacent to the bead cores, and
wherein H2/H1 is 0.08 or more, where H1 represents a tire cross-sectional height, in mm, and H2 represents a height, in mm, of the bead filler based on an interface with the bead core.

14. The tire of claim 7 or 8, wherein a total content, in % by mass, of the isoprene-based rubber and the butadiene rubber in the rubber component is greater than 90% by mass.

15. The tire of claim 9, wherein a total content, in % by mass, of the isoprene-based rubber and the styrene-butadiene rubber in the rubber component is greater than 90% by mass.

16. The tire of claim 10, wherein a total content, in % by mass, of the butyl-based rubber and the isoprene-based rubber in the rubber component is greater than 90% by mass.

# FIG.1

Europäisches
Patentamt

European
Patent Office

Office européen
des brevets

# EUROPEAN SEARCH REPORT

**Application Number**

EP 25 15 9557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 180 240 A1 (SUMITOMO RUBBER IND [JP]) 17 May 2023 (2023-05-17) | 1-6,8,9, 11-15 | INV. B60C1/00 |
| Y | * paragraphs [0135] - [0141]; claims 1-10; figures 1,2; tables 1,2 * | 7,10,16 | B60C5/14 B60C15/06 B60C13/00 |
| Y | EP 4 166 353 A1 (SUMITOMO RUBBER IND [JP]) 19 April 2023 (2023-04-19) * claims 1-9; figure 1; tables 1-1,1-2 * | 7 | |
| Y | EP 4 311 687 A1 (SUMITOMO RUBBER IND [JP]) 31 January 2024 (2024-01-31) * claims 1-9; figure 1; table 1 * | 10,16 | |

**TECHNICAL FIELDS SEARCHED (IPC)**

B60C

The present search report has been drawn up for all claims

| Place of search | Date of completion of the search | Examiner |
|---|---|---|
| Munich | 27 June 2025 | Carneiro, Joaquim |

EPO FORM 1503 03.82 (P04C01)

## ANNEX TO THE EUROPEAN SEARCH REPORT
## ON EUROPEAN PATENT APPLICATION NO.

EP 25 15 9557

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2025

| Patent document cited in search report | | Publication date | Patent family member(s) | | Publication date |
|---|---|---|---|---|---|
| EP 4180240 | A1 | 17-05-2023 | CN | 116102796 A | 12-05-2023 |
| | | | EP | 4180240 A1 | 17-05-2023 |
| EP 4166353 | A1 | 19-04-2023 | CN | 115991896 A | 21-04-2023 |
| | | | EP | 4166353 A1 | 19-04-2023 |
| EP 4311687 | A1 | 31-01-2024 | EP | 4311687 A1 | 31-01-2024 |
| | | | JP | 2024015858 A | 06-02-2024 |

For more details about this annex : see Official Journal of the European Patent Office, No. 12/82

**REFERENCES CITED IN THE DESCRIPTION**

**Patent documents cited in the description**

- JP 2013001889 A
- EP 3427975 A
- JP 6856781 B
- EP 3173251 A
- JP 2009002594 A

**Non-patent literature cited in the description**

- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193
- *Akita Prefectural University Web Journal*, 2019, vol. 6, 216-222